# EUROPÄISCHE PATENTSCHRIFT

(11) **EP 3 277 476 B1**
(45) Veröffentlichungstag und Bekanntmachung des Hinweises auf die Patenterteilung: **20.05.2020**
(21) Anmeldenummer: 16712263.9
(22) Anmeldetag: 11.03.2016
(51) Int. Cl.: B29C 45/14, B29C 45/16, F16D 3/38, G01C 15/00, B29D 99/00

(54) **VERFAHREN ZUR HERSTELLUNG EINER PENDELANORDNUNG EINER PENDELLASERVORRICHTUNG SOWIE PENDELLASERVORRICHTUNG**
METHOD FOR MANUFACTURING A PENDULUM ARRANGEMENT OF A PENDULUM LASER APPARATUS, AND PENDULUM LASER APPARATUS
PROCÉDÉ DE RÉALISATION D'UN AGENCEMENT PENDULAIRE D'UN DISPOSITIF LASER PENDULAIRE ET DISPOSITIF LASER PENDULAIRE

(30) Priorität: 02.04.2015 DE 102015206057
(43) Veröffentlichungstag der Anmeldung: 07.02.2018
(73) Patentinhaber: Robert Bosch GmbH, 70442 Stuttgart (DE)
(72) Erfinder: GEISE, Stephan, 59602 Ruethen (DE); APELT, Stefan, 71554 Weissach Im Tal (DE)
(86) Internationale Anmeldenummer: PCT/EP2016/055244
(87) Internationale Veröffentlichungsnummer: WO 2016/156012

(56) Entgegenhaltungen:
- EP-A1- 0 172 398
- EP-A1- 1 508 711
- EP-A1- 2 698 267
- EP-A2- 0 626 301
- DE-A1- 2 032 778
- DE-A1-102007 039 340
- DE-A1-102013 219 263
- DE-B3-102009 045 324
- DE-C1- 3 720 852
- DE-U1-202011 004 651
- FR-A1- 2 463 316
- US-A- 3 089 232
- US-A- 3 764 647

## Beschreibung

### Stand der Technik

Die Erfindung betrifft ein Verfahren zur Herstellung einer Pendelanordnung einer Pendellaservorrichtung mittels Kunststoff-Spritzgießtechnik. Des Weiteren betrifft die Erfindung eine derartige Pendellaservorrichtung.

Aus der DE 20 2011 004 651 U1 ist eine Nivelliervorrichtung zum Erzeugen eines optischen Nivelliersignals bekannt, die ein Gehäuse und eine in dem Gehäuse pendelbar angeordnete Lichtsignalvorrichtung zur Erzeugung eines Nivelliersignals aufweist, wobei das Gehäuse über eine Austrittsöffnung für das Nivelliersignal verfügt.

Aus DE 10 2007 039 343 A1 ist der allgemeine Aufbau einer Pendellaservorrichtung bekannt.

Konkrete Ausführungsformen von Pendellaservorrichtungen sind aus DE 10 2007 039 340 A1 sowie aus DE 10 2009 016 169 A1 und DE 421 08 24 A1 bekannt.

Ferner ist aus DE 20 327 78 A1 bekannt, ein Kreuzgelenk mittels Kunststoff-Spritzgießtechnik unter Formung zweier orthogonaler Wellen zu fertigen, wobei eine Bestückung der Wellen mit Wälzlagern nach Herstellung des Kreuzgelenks erfolgt.

Bei aus dem Stand der Technik bekannten Pendellaservorrichtungen wird die Montage der für die Funktionalität der Pendellaservorrichtung zentralen Pendelanordnung, insbesondere des verwendeten Pendels, in einer Vielzahl von Einzelschritten und unter Verwendung einer Vielzahl separat gefertigter Einzelkomponenten durchgeführt. Dabei bestehen die Komponenten typischerweise aus mechanisch zerspantem Gussmetall, die durch geschliffene Stifte mit Kugellagern in den dafür vorgesehenen Führungen der Bauteile, insbesondere einer Aufhängung, pendelbar befestigt werden. Um eine ausreichende Genauigkeit der Ausrichtung eines von der Pendellaservorrichtung ausgesendeten Nivelliersignals zu gewährleisten, müssen die verwendeten Komponenten, insbesondere die Kugellager, deren Führungen sowie die Aufhängung, hochgenau bearbeitet werden, damit das die optischen Komponenten wie Laser aufnehmende Pendel präzise gehalten und austariert wird.

### Offenbarung der Erfindung

Das vorgeschlagene Herstellungsverfahren für eine Pendelanordnung einer Pendellaservorrichtung weist zumindest einen Verfahrensschritt auf, bei dem ein Kreuzgelenk eines Pendels der Pendelanordnung mittels Kunststoff-Spritzgießtechnik unter Formung zweier orthogonaler, mit Wälzlagern bestückten Wellen gefertigt wird, und einen zweiten Verfahrensschritt, bei dem ein Optikträger des Pendels der Pendelanordnung mittels Kunststoff-Spritzgießtechnik einstückig, insbesondere form- und kraftschlüssig, mit dem Kreuzgelenk gefertigt wird. Erfindungsgemäß ist vorgesehen, dass das Kreuzgelenk durch Umspritzen zumindest zweier, je eine Welle des Kreuzgelenks definierenden Wälzlager, mittels Kunststoff-Spritzgießtechnik einstückig, insbesondere form- und kraftschlüssig, mit den Wälzlagern gefertigt wird.

Pendellaservorrichtungen dienen der Erzeugung von optischen Markierungen, insbesondere Lasermarkierungen, im Rahmen von Nivellier-, Ausricht-, Vermessungs- und/oder Markierungsaufgaben, wie sie insbesondere im handwerklichen Bereich auftreten, beispielsweise bei einem Innenausbau von Gebäuden, bei Bauarbeiten, bei der Anbringung von Markierungen an Wänden oder dergleichen. Prinzipiell erlauben Pendellaservorrichtungen Lasermarkierungen zu erzeugen, insbesondere auf Objekte zu projizieren, die eine von einer Ausrichtung von Böden, Decken, Wänden oder anderen Gegenständen, beispielsweise der vertikalen Wand eines Schranks, insbesondere aber auch eine von der Ausrichtung des Gehäuses der Pendellaservorrichtung, unabhängige Referenz darstellen.

Grundsätzlich erlauben Pendellaservorrichtungen in zumindest einem Betriebszustand eine am Gravitationsfeld, d.h. eine an der Richtung der Schwerkraft oder eine bezogen auf das Lot, ausgerichtete Lasermarkierung als Referenz zu erzeugen. Insbesondere kann die erzeugte Lasermarkierung bezogen auf die Pendellaservorrichtung beispielsweise horizontal und/oder vertikal und/oder unter einem anderen definierten Winkel zum Lot ausgerichtet sein.

Dazu weisen Pendellaservorrichtungen typischerweise ein Gehäuse mit mindestens einer Öffnung, insbesondere einem Fenster auf, wobei in dem Gehäuse zumindest eine Pendelanordnung angeordnet ist. Die Pendelanordnung, insbesondere das umfasste Pendel der Pendelanordnung, ist zum Halten sowie Ausrichten mindestens einer Lasereinheit mittels einer Laseraufnahme vorgesehen, wobei die Laseraufnahme - und damit auch die Lasereinheit - mittels des Pendels der Pendelanordnung im Wesentlichen unabhängig von einer Ausrichtung des Gehäuses am Lot frei selbst-ausrichtbar, insbesondere allseitig pendelbar oder schwingend, ausgebildet ist. Die Lasereinheit dient bei deren Betrieb der Erzeugung zumindest einer Lasermarkierung auf einem Objekt.

Die Pendelanordnung der Pendellaservorrichtung verfügt über eine am Gehäuse oder eine an einem mit dem Gehäuse verbundenen Teil angeordnete Pendelaufhängung, die eine lotrechte Ausrichtung des an der Pendelaufhängung pendelbar angeordneten Pendels im Gravitationsfeld und im Wesentlichen unabhängig von der Ausrichtung des Gehäuses erlaubt. Die lotrechte Ausrichtung des Pendels kann beispielsweise unter Verwendung einer kardanischen Lagerung realisiert sein. Unter "im Wesentlichen unabhängig von einer Ausrichtung des Gehäuses" soll verstanden werden, dass gegebenenfalls ein Winkelbereich für die Ausrichtung des Gehäuses existiert, auf den die Funktion des Pendels, insbesondere dessen präzise Ausrichtung am Lot, beschränkt ist. Insbesondere umfasst dieser Winkelbereich beispielsweise 2° bis 15° von der Lotrechten, typischerweise 5° bis 8°. Um die Einschwingdauer des pendelnd und im Rahmen des technisch Möglichen möglichst reibungsfrei aufgehängten Pendels zu verkürzen, ohne die Einstellgenauigkeit der Endposition des Pendels im Gravitationsfeld zu verringern, kann das Pendel eine Wirbelstromdämpfung nach dem Prinzip des Waltenhof'schen Pendels aufweisen. Vorteilhaft kann sich das Pendel der Pendellaservorrichtung - und damit auch die Laseraufnahme samt Lasereinheit - nach dem Aufstellen der Pendellaservorrichtung oder nach einem Stoß gegen die Pendellaservorrichtung innerhalb kurzer Zeit mit einer hohen Genauigkeit im Gravitationsfeld der Erde selbsttätig ausrichten.

Die Laseraufnahme dient der Aufnahme zumindest einer Lasereinheit. Vorteilhaft ist die Laseraufnahme einstückig, insbesondere stoff-, kraft- und/oder formschlüssig mit dem Pendel, insbesondere einem Optikträger als Bestandteil des Pendels, realisiert. Ferner dient die Laseraufnahme der Ausrichtung der Lasereinheit in Bezug auf eine Vorzugsrichtung, und somit auch in Bezug auf das Pendel der Pendellaservorrichtung, sowie deren mittelbarer Befestigung an dem Pendel.

Die Lasereinheit weist zumindest eine Lichtquelle zur Erzeugung einer Lasermarkierung auf einem Objekt auf, beispielsweise einen Laser, einen Halbleiterlaser oder eine Laserdiode. Ebenfalls kann die Lasereinheit strahlformende und/oder strahllenkende und/oder die Eigenschaften der Laserstrahlung beeinflussende optische Element, insbesondere beispielsweise Linsen, Filter, diffraktive Elemente, Spiegel, Reflektoren, optisch transparente Scheiben oder dergleichen, aufweisen. Insbesondere Zylinderlinsen können genutzt werden, um technisch einfach eine Auffächerung des von der Lichtquelle emittierten Laserstrahls zu einer Laserebene zu realisieren, sodass bei Projektion dieser Laserebene auf einen Gegenstand eine Linie, insbesondere eine Markierungslinie, entsteht. Ferner kann die Lasereinheit auch nicht-optische Elemente, beispielsweise Mittel zur Justierung und/oder elektronische Schaltungen zur Steuerung der Lichtquelle und/oder zur Steuerung anderer Komponenten der Lasereinheit, aufweisen. Insbesondere kann die Lasereinheit auch einen Motor zur Rotation der Lichtquelle und/oder eines strahlumlenkenden optischen Elements aufweisen, ebenfalls geeignet zur Erzeugung einer in einer Ebene aufgefächerten Lasermarkierung, wie insbesondere bei sogenannten Rotationslasern.

Die Ausgestaltung, insbesondere Form und Farbe, der mittels der Pendellaservorrichtung, insbesondere der Lasereinheit, erzeugten Lasermarkierung kann, unter anderem je nach Einsatzbereich und Aufgabe, unterschiedlich sein, insbesondere aber zumindest Markierungspunkte und/oder Markierungslinien, auch unterbrochene Markierungslinien, umfassen. Ferner kann die Lasereinheit dazu vorgesehen sein, die Lasermarkierung zeitlich veränderlich, insbesondere beispielsweise blinkend, auszuführen. Unter "vorgesehen" soll insbesondere speziell "programmiert", "ausgelegt" und/oder "ausgestattet" verstanden werden. Darunter, dass ein Objekt zu einer bestimmten Funktion "vorgesehen" ist, soll insbesondere verstanden werden, dass das Objekt diese bestimmte Funktion in zumindest einem Anwendungs- und/oder Betriebszustand erfüllt und/oder ausführt oder dazu ausgelegt ist, die Funktion zu erfüllen.

Vorzugsweise kann die Pendellaservorrichtung auch mehrere, insbesondere zwei oder drei, Lasereinheiten aufweisen, die mittels zumindest einer, alternativ mittels je einer Laseraufnahme am Optikträger des Pendels aufgenommen sind, sodass bei Ausrichtung des Pendels am Lot zeitgleich mehrere Lasereinheiten und damit auch deren erzeugte Lasermarkierungen bezogen auf das Lot ausgerichtet werden und als Referenz dienen können. Bevorzugt kann die Pendellaservorrichtung zumindest zwei Lasereinheiten aufweisen, die zueinander orthogonale Laserebenen emittieren, deren Projektion auf Objekte jeweils zueinander orthogonale Markierungslinien erzeugt. Besonders bevorzugt weist dabei eine vertikal ausgerichtete Laserebene entlang der durch das Lot vorgegebenen Richtung, d.h. die vertikal ausgerichtete Laserebene ist kollinear mit einem die Schwerkraft beschreibenden Vektor.

Die Pendellaservorrichtung weist des Weiteren eine Vorrichtung auf, die dazu vorgesehen ist, die Pendellaservorrichtung zur Inbetriebnahme und während des Betriebs mit elektrischer Energie zu versorgen. Bevorzugt handelt es sich bei dieser Vorrichtung um einen stromnetzunabhängigen Energiespeicher, insbesondere um einen Akkumulator, eine Batterie, eine Brennstoffzelle, einen Kondensator, einen anderweitigen, dem Fachmann sinnvoll erscheinenden Energiespeicher oder eine Kombination/Mehrung derer. Insbesondere eigenen sich zur Energieversorgung der Pendellaservorrichtung wiederaufladbare Akkumulatoren, beispielsweise mit einer Nickel-Metallhydrid-, Lithium- oder Lithium-Ionen-Zellchemie. Vorzugsweise weist die Vorrichtung zur Energieversorgung eine lösbare Formschluss- und/oder Kraftschlussverbindungsschnittstelle auf. Unter "lösbar" soll in diesem Zusammenhang insbesondere zerstörungsfrei trennbar, insbesondere durch einen Nutzer der Pendellaservorrichtung zerstörungsfrei trennbar, verstanden werden. Somit ist die Vorrichtung zur Energieversorgung bevorzugt abnehmbar und austauschbar an dem Messgerät anordenbar. Besonders bevorzugt lässt sich die abnehmbare Vorrichtung zur Energieversorgung in und/oder außerhalb des Messgeräts wieder mit Energie aus einem Stromnetz versorgen und laden.

Dem Ein- und Ausschalten der Pendellaservorrichtung dient ein insbesondere am Gehäuse angeordneter Schalter oder ein alternatives Element, das diese Funktion erfüllt. Des Weiteren können weitere, einem Fachmann sinnvoll erscheinende Ausführungen vorgesehen sein, beispielsweise ein weiterer Schalter, der der Arretierung des Pendels in dem Gehäuse, insbesondere zu Transportzwecken oder zur Verkippung der Pendellaservorrichtung nach erfolgtem Auspendeln des Pendels, dient.

Bezüglich der Nomenklatur wird im Folgenden davon ausgegangen, dass die Pendellaservorrichtung typischerweise - allerdings nicht notwendigerweise - ein Gehäuse aufweist, wobei in dem Gehäuse zumindest eine Pendelanordnung vorgesehen ist. Die Pendelanordnung bezeichnet die gesamte funktionale Vorrichtung bestehend aus einer am Gehäuse oder einer an einem mit dem Gehäuse verbundenen Teil angeordneten Pendelaufhängung sowie einem an dieser Pendelaufhängung pendelbar angeordneten Pendel. Zur Erwirkung des freien Schwingens des Pendels weist die Pendelanordnung eine geeignete Lagerung oder ein Gelenk als Bestandteil des Pendels auf, die bzw. das ein freies, insbesondere reibungsarmes Schwingen des Pendels im Schwerefeld um zumindest zwei im Wesentlichen orthogonale Achsen ermöglicht. Beispielsweise kann eine derartige Lagerung oder ein derartiges Gelenk in Form einer kardanischen Lagerung realisiert sein. Neben der Lagerung oder dem Gelenk besteht das Pendel der Pendelanordnung ferner aus einem Optikträger zur Aufnahme zumindest einer Lasereinheit, wobei die Aufnahme bevorzugt mittels einer Laseraufnahme realisiert ist.

Alternativ und/oder zusätzlich kann der prinzipielle Aufbau der Pendelanordnung auch abweichend realisiert sein, beispielsweise indem das freie Schwingen des Pendels mittels einer geeigneten Lagerung oder eines Gelenks als Bestandteil der Pendelaufhängung realisiert ist. Die erfindungswesentlichen Grundsätze und technische Lehren der im Folgenden zur Veranschaulichung der Vorteile der Erfindung aufgezeigten Ausführungsbeispiele lassen sich selbstverständlich auf beliebige Ausgestaltungen der Pendelanordnung übertragen.

Das erfindungsgemäße Herstellungsverfahren für die Pendelanordnung einer Pendellaservorrichtung weist zumindest einen ersten Verfahrensschritt auf, bei dem ein Kreuzgelenk des Pendels der Pendelanordnung mittels Kunststoff-Spritzgießtechnik unter Formung zweier orthogonaler, mit Wälzlagern bestückten Wellen gefertigt wird. Insbesondere können die Wälzlager an den jeweiligen Enden der mittels Kunststoff-Spritzgießtechnik gefertigten Wellen vorgesehen sein.

In einem zweiten Verfahrensschritt des Herstellungsverfahrens wird ein Optikträger des Pendels der Pendelanordnung mittels Kunststoff-Spritzgießtechnik einstückig, insbesondere form- und kraftschlüssig, mit dem Kreuzgelenk gefertigt. Das Kreuzgelenk wird durch Umspritzen zumindest zweier, je eine Welle des Kreuzgelenks definierenden Wälzlager, mittels Kunststoff-Spritzgießtechnik einstückig, insbesondere form- und kraftschlüssig, mit den Wälzlagern gefertigt.

Das Kreuzgelenk des Pendels stellt eine vorteilhafte Ausführungsform einer kardanischen Lagerung dar, bei dem zwei zueinander orthogonal ausgerichtete, mit Wälzlagern bestückte Wellen ausgeformt sind, um die das Kreuzgelenk je eine rotative Drehbewegung ausführen kann. Die Wellen definieren dabei je eine Wellenachse, die jeweils den Mittelpunkt der Drehbewegung um die zugehörige Welle definiert. Die zwei zueinander orthogonal ausgerichteten Wellenachsen können beabstandet oder ohne Abstand zueinander vorgesehen sein.

Unter Wälzlager sind insbesondere Lager zu verstehen, bei denen zwischen einem inneren Ring und einem äußeren Ring rollende oder wälzende Körper einen Reibungswiderstand bei einer relativen Bewegung des äußeren und des inneren Rings zueinander verringern. Die in vorgeschlagenem Herstellungsverfahren verwendbaren Wälzlager können insbesondere als Radiallager, alternativ auch als Axiallager, bevorzugt aber als Kugellager oder Rollenlager, ausgebildet sein. Unter Verwendung radialer Kugel- oder Rollen-Wälzlager, mit denen die Wellen des Kreuzgelenks bestückt sind, kann vorteilhaft eine besonders leichtgängige, insbesondere nahezu reibungsfreie Drehbewegung des Kreuzgelenks um die jeweilige Wellenachse realisiert werden. Bevorzugt werden die Wälzlager an den Wellen derart verwendet, dass ein innerer (äußerer) Bereich des radialen Wälzlagers fest mit einer Welle des Kreuzgelenks verbunden ist, während der äußere (innere) Teil des Wälzlagers fest mit einem anderen Bestandteil der Pendelaufhängung, der frei drehbar bezüglich der jeweiligen Wellenachse des Kreuzgelenks gelagert sein soll, verbunden wird. Einen solchen Bestandteil kann vorteilhaft insbesondere der Optikträger des Pendels oder ein Bestandteil der Pendelaufhängung der Pendelanordnung darstellen. Besonders vorteilhaft kann auf diese Weise eine freie Rotation des Kreuzgelenks um eine entsprechende Wellenachse relativ zu einem daran befestigten Optikträger oder relativ zu einer daran befestigten Pendelaufhängung gewährleistet werden.

In dem ersten Verfahrensschritt wird das Kreuzgelenk des Pendels der Pendelanordnung mittels Kunststoff-Spritzgießtechnik unter Formung zweier zueinander orthogonaler, mit Wälzlagern bestückten Wellen gefertigt. Dazu werden die Wälzlager in ein erstes Spritzgießwerkzeug, insbesondere eine erste Spritzgießform, eingelegt, positioniert und nach Schließen des Spritzgießwerkzeugs im Spritzgießverfahren vorteilhaft an ein durch Einspritzen und anschließendes Aushärten eines Kunststoffmaterials entstehendes Kreuzgelenk-Spritzgussbauteil direkt angebunden. Bevorzugt umfließt das eingespritzte Kunststoffmaterial die Wälzlager im Spritzgießwerkzeug und führt zu einer Anbindung der Wälzlager. Zumindest je ein Wälzlager formt durch das Einspritzen von Kunststoff je eine der zwei zueinander orthogonalen Wellen und definiert fortan deren Wellenachsen.

Das in dem ersten Verfahrensschritt gefertigte Kreuzgelenk des Pendels der Pendelanordnung wird anschließend dem ersten Spritzgießwerkzeug entnommen und in erfindungsgemäßem zweiten Verfahrensschritt weiterverwendet, indem ein Optikträger des Pendels der Pendelanordnung ebenfalls mittels Kunststoff-Spritzgießtechnik einstückig, insbesondere form- und kraftschlüssig, mit dem Kreuzgelenk gefertigt wird. Der Optikträger des Pendels der Pendelanordnung stellt denjenigen Teil des Pendels der Pendelanordnung dar, der der Aufnahme sowie der Ausrichtung zumindest einer Lasereinheit im Schwerefeld dient. In einer Ausführungsform des zweiten Verfahrensschritts wird das im ersten Verfahrensschritt hergestellte Kreuzgelenk in ein weiteres Spritzgießwerkzeug, insbesondere in eine weitere Spritzgießform, eingelegt und nach Schließen des Spritzgießwerkzeugs ein weiterer Kunststoff-Spritzgießverfahrensschritt durchgeführt. Dabei ist die Form des Spritzgießwerkzeugs derart vorgeformt, dass infolge des Einspritzens von Kunststoff ein Optikträger gewünschter Form entsteht, der erfindungsgemäß einstückig, insbesondere form- und kraftschlüssig, mit dem Kreuzgelenk ausgebildet ist.
Einstückig in dem Sinne bedeutet, dass der Optikträger und das Kreuzgelenk zwar nicht notwendigerweise aus einem einzigen und einheitlichen Teil und/oder Material gefertigt werden, jedoch im Spritzgießverfahren als fest und innig, insbesondere form- und kraftschlüssig, miteinander verbunden gefertigt werden, sodass sie bevorzugt nicht als mehrere aneinander gefügte Bauteile erscheinen und jedenfalls nicht mehr voneinander gelöst werden können, ohne dabei zerstört zu werden.

Vorteilhaft erlaubt die Erfindung ein Pendel einer Pendelanordnung einer Pendellaservorrichtung mit besonders wenigen Montageschritten und besonders wenigen Einzelkomponenten zu fertigen. Insbesondere lässt sich auf diese Weise mit lediglich zwei Verfahrensschritten des Herstellungsverfahrens ein Pendel herstellen, bei dem die Anzahl verwendeter Bauteile oder Komponenten minimiert ist. Demnach sind keine aufwendige Herstellung von Einzelkomponenten sowie keine Montage einer Vielzahl von Einzelkomponenten durchzuführen, sodass das Herstellungsverfahren vorteilhaft beschleunigt und wirtschaftlich gestaltet wird.

Ferner kann durch die Fertigung eines Pendels nach erfindungsgemäßem Herstellungsverfahren besonders vorteilhaft auf aufwendige Bearbeitungs- und/oder Justierschritte, bei denen Einzelkomponenten im Herstellungsverfahren der Pendelanordnung zeit- und kostenintensiv möglichst präzise positioniert und in ihren Führungen aufwendig angepasst werden, verzichtet werden. Da im erfindungsgemäßen Herstellungsverfahren sowohl das Kreuzgelenk als auch der Optikträger mittels Kunststoff-Spritzgießtechnik aufeinander aufbauend und aufeinander angepasst hergestellt werden, muss keine Anpassung von Positionen sowie keine Anpassung von Gelenkwellen oder Führungen der Wellen und Kugellager in typischerweise aufwendigen Zerspanungsprozessen durchgeführt werden. Besonders vorteilhaft wird auf diese Weise eine Funktionsintegration von Komponenten direkt im Herstellungsverfahren durchgeführt, mit der Folge, dass Fehler, insbesondere auch Fertigungstoleranzen, minimiert werden und die Herstellung der Pendellaservorrichtung hinsichtlich Korrektur und/oder Ausgleich von Fertigungstoleranzen vereinfacht und beschleunigt wird. Insbesondere liegen die Fertigungstoleranzen in erfindungsgemäßem Herstellungsverfahren unter 1 mm, bevorzugt unter 1/10 mm, besonders bevorzugt unter 1/100 mm. Das erfindungsgemäße Herstellungsverfahren erlaubt daher eine besonders wirtschaftliche und schnelle, gleichzeitig aber auch besonders definierte, präzise und reproduzierbare Herstellung einer Pendelanordnung.

Erfindungsgemäß wird das Kreuzgelenk durch Umspritzen zumindest zweier, je eine Welle des Kreuzgelenks definierenden Wälzlager mittels Kunststoff-Spritzgießtechnik einstückig, insbesondere form- und kraftschlüssig, mit den Wälzlagern gefertigt.

In dem ersten Verfahrensschritt, bei dem das Kreuzgelenk des Pendels der Pendelanordnung mittels Kunststoff-Spritzgießtechnik unter Formung zweier zueinander orthogonaler, mit Wälzlagern bestückten Wellen gefertigt wird, werden die Wälzlager zunächst in ein Spritzgießwerkzeug, insbesondere eine Spritzgießform, eingelegt. Das Spritzgießwerkzeug ist dabei bevorzugt derart gestaltet, dass die Wälzlager, die in das Spritzgießwerkzeug eingelegt werden, im Spritzgießverfahren vorteilhaft nur teilweise benetzt werden können, so dass nur einer der gegeneinander beweglichen Bestandteile eines jeweiligen Wälzlagers, insbesondere ein Innen- oder Außenring des jeweiligen Wälzlagers, an das entstehende Spritzgussbauteil angebunden wird. In einer bevorzugten Ausführungsform des Herstellungsverfahrens werden beispielsweise die Wälzlager derart in das Spritzgießwerkzeug eingelegt, dass die Wälzlager in die Aufnahmen des Auswerfers und der Angießbuchse in der Kavität des Spritzgießwerkzeugs zu liegen kommen, sodass ein im Spritzgießverfahren eingespritztes Material durch den jeweiligen inneren Ring der Wälzlager gespritzt wird, während der jeweilige äußere Ring sowie die beweglichen Walzen der Wälzlager von dem eingespritzten Material unbenetzt bleiben. Zumindest je ein Wälzlager dient somit der Formung je einer Welle durch Einspritzen von Kunststoff und definiert auf diese Weise also je eine der zwei zueinander orthogonalen Wellen. Nach Positionieren der Wälzlager in dem Spritzgießwerkzeug wird dieses geschlossen und ein Kunststoffmaterial in die Form eingespritzt. Dabei umspritzt oder umfließt die eingespritzte Masse die Wälzlager im Spritzgießwerkzeug und führt in Folge des anschließenden Aushärtens des Kunststoffs zu einer festen Anbindung der Wälzlager an die jeweilige Welle.

Bevorzugt sind damit die Wälzlager untrennbar, insbesondere einstückig, mit dem Kunststoff des Kreuzgelenks verbunden, so dass eine Trennung beider Komponenten nicht ohne eine Zerstörung des Kreuzgelenkbauteils einhergeht. Unter einstückig in diesem Sinne ist insbesondere zu verstehen, dass in dem Kunststoff-Spritzgießverfahren der Kunststoff an zumindest eine Komponente des Wälzlagers, insbesondere einen inneren oder einen äußeren Ring des Wälzlagers, fest und innig, insbesondere form- und kraftschlüssig, angebunden wird, sodass sie bevorzugt nicht als mehrere aneinander gefügte Bauteile erscheinen und jedenfalls nicht mehr voneinander gelöst werden können, ohne dabei zerstört zu werden.

Das Umspritzen eines Wälzlagers mit Kunststoff meint insbesondere nicht notwendigerweise das vollständige Umhüllen des Wälzlagers mit Kunststoff, sondern vielmehr die Anbindung einer Komponente des Wälzlagers, insbesondere eines inneren oder eines äußeren der zueinander beweglich gelagerten Ringe des Wälzlagers, durch um-, an- bzw. einspritzen und anschließendes bevorzugt passgenaues Aushärten des Kunststoffs, wobei die Funktionalität des Wälzlagers uneingeschränkt erhalten bleibt. Beispielsweise kann ein Wälzlager durch Einspritzen von Kunststoff in einen inneren Ring des Wälzlagers in Folge des Aushärtens derart an den Kunststoff angebunden werden, dass der äußere Ring sowie die Wälzmittel ohne Kontakt zu Kunststoff verbleiben und somit das Wälzlager in seiner Funktionalität, insbesondere hinsichtlich einer freien Beweglichkeit des äußeren Rings gegenüber dem inneren Ring des Wälzlagers, nicht eingeschränkt ist. Durch Umspritzen, insbesondere auch Einspritzen, des Kunststoffs um bzw. in zumindest zwei, je eine Welle des Kreuzgelenks definierenden Wälzlager, werden diese Wälzlager nicht-zerstörungsfrei trennbar als ein Gesamtbauteil, das Kreuzgelenk des Pendels, mit dem eingespritzten Kunststoff verbunden. Insbesondere können sich die Wellenachsen der Wellen dabei schneiden oder zueinander beabstandet sein. Bevorzugt ist das Spritzgießwerkzeug vorgesehen, insbesondere geformt, um eine Herstellung des Kreuzgelenks in erfindungsgemäßem Herstellungsverfahren zu gewährleisten.

Vorteilhaft wird somit eine besonders genaue Positionierung der Wälzlager bezogen auf das hergestellte Kreuzgelenk erreicht, bei Verringerung der Fertigungstoleranzen. Ferner wird eine besonders stabile, insbesondere einstückige, Verbindung zwischen Wälzlager und Kunststoff des Kreuzgelenks realisiert, die insbesondere langzeitstabil, stabil gegenüber mechanischen Einflüssen und stabil gegenüber thermischen Schwankungen ist. Ebenfalls ist durch die einfache Herstellung des Kreuzgelenks in erfindungsgemäßem Herstellungsverfahren, das auf die Montierung einer Vielzahl von Einzelteilen verzichtet, eine kostengünstige und schnelle, daher besonders wirtschaftliche Herstellung des Kreuzgelenks realisierbar.

In einer vorteilhaften Ausführungsform des erfindungsgemäßen Herstellungsverfahrens weisen die Wälzlager des Kreuzgelenks zumindest eine, die Haftung der Wälzlager verbessernde, Oberflächenstruktur auf.

Vorteilhaft ist die Oberflächenstruktur, die zumindest teilweise auf der Oberfläche der Wälzlager, beispielsweise auf der Innen- und/oder Außenfläche des inneren bzw. äußeren Rings des Wälzlagers, vorgesehen ist, geeignet, eine Verbesserung der Haftung zwischen ein- bzw. umspritzendem Kunststoff sowie dem Wälzlager zu bewirken. Vorteilhaft weist die Oberflächenstruktur Muster auf, beispielsweise in Form von Querrillen oder Kreuzen, wobei die Oberflächenstruktur insbesondere plastisch dreidimensional ausgeformt ist. Insbesondere wirkt die Oberflächenstruktur die Haftung der Wälzlager und somit die einstückige Gestalt des Kreuzgelenks mechanisch stabilisierend, sobald der Kunststoff ausgehärtet ist. Die Oberflächenstruktur stellt dabei eine bessere Angriffsfläche dar, die eine Verzahnung von Wälzlager und ausgehärtetem Kunststoff bewirkt und somit ein Gleiten, Rutschen oder anderweitiges Bewegen von Wälzlager und eingespritztem Kunststoff zueinander verhindert.

In einer bevorzugten Ausführungsform des erfindungsgemäßen Herstellungsverfahrens wird der Optikträger durch Umspritzen zumindest eines an einer Welle des Kreuzgelenks befindlichen Wälzlagers mittels Kunststoff-Spritzgießtechnik einstückig, insbesondere form- und kraftschlüssig, mit dem Kreuzgelenk gefertigt.

Das Umspritzen eines Wälzlagers mit Kunststoff meint insbesondere nicht notwendigerweise das vollständige Umhüllen des zumindest einen Wälzlagers mit Kunststoff, sondern vielmehr die Anbindung einer Komponente des Wälzlagers, insbesondere eines inneren oder eines äußeren der zueinander beweglich gelagerten Ringe des Wälzlagers, durch um-, an- bzw. einspritzen und anschließendes bevorzugt passgenaues Aushärten des Kunststoffs, wobei die Funktionalität des zumindest einen Wälzlagers uneingeschränkt erhalten bleibt.

Beispielsweise kann ein Optikträger durch Umspritzen eines äußeren Rings des zumindest einen Wälzlagers in Folge des Aushärtens des Kunststoffs derart an das zumindest eine Wälzlager, insbesondere dessen äußeren Ring, angebunden werden, dass Optikträger, Wälzlager und somit auch Kreuzgelenk ein einstückiges, insbesondere form- und kraftschlüssiges, Bauteil bilden. Dabei bleibt der innere Ring als Bestandteil des Kreuzgelenks sowie die Wälzmittel unbenetzt von Kunststoff, sodass das zumindest eine Wälzlager in seiner Funktionalität, insbesondere hinsichtlich einer freien Beweglichkeit des äußeren Rings gegenüber dem inneren Ring, nicht eingeschränkt ist.

Einstückig in dem Sinne bedeutet, dass der Optikträger und das Kreuzgelenk zwar nicht notwendigerweise aus einem einzigen und einheitlichen Teil und/oder Material gefertigt werden, jedoch im Spritzgießverfahren als fest und innig, insbesondere form- und kraftschlüssig, miteinander verbunden gefertigt werden, sodass sie bevorzugt nicht als mehrere aneinander gefügte Bauteile erscheinen und jedenfalls nicht mehr voneinander gelöst werden können, ohne dabei zerstört zu werden.

Bevorzugt ist ein weiteres Spritzgießwerkzeug zur Durchführung des zweiten Herstellungsschritts vorgesehen, insbesondere derart geformt, eine Herstellung eines einstückigen Pendels samt Optikträger durch Umspritzen zumindest eines an einer Welle des Kreuzgelenks befindlichen Wälzlagers mittels Kunststoff-Spritzgießtechnik zu ermöglichen.

Durch Umspritzen eines an der Welle des Kreuzgelenks befindlichen Wälzlagers kann vorteilhaft eine besonders definierte, präzise und reproduzierbare Ausrichtung des Optikträgers bezogen auf das Kreuzgelenk durchgeführt werden, bei Verringerung der Fertigungstoleranzen. Ferner wird eine besonders stabile, insbesondere einstückige, Verbindung zwischen Optikträger und Wälzlager des Kreuzgelenks realisiert, die insbesondere langzeitstabil, stabil gegenüber mechanischen Einflüssen und stabil gegenüber thermischen Schwankungen ist.

Ebenfalls ist durch die einfache Herstellung des Optikträgers in erfindungsgemäßem Herstellungsverfahren, das auf die Montierung einer Vielzahl von Einzelteilen verzichtet, eine kostengünstige und schnelle, daher besonders wirtschaftliche Herstellung des Kreuzgelenks realisierbar.
In einer vorteilhaften Ausführungsform des erfindungsgemäßen Herstellungsverfahrens wird, insbesondere unter Verwendung eines Mittels zum Erzeugen einer Hinterschneidung, im Kunststoff-Spritzgießverfahren zumindest eine Aufnahme in dem Optikträger zur Aufnahme einer Lasereinheit ausgeformt.

Bevorzugt wird eine Aufnahme einer Lasereinheit in dem Optikträger während des Kunststoff-Spritzgießverfahrens beispielsweise in Form einer den Optikträger in seiner Tiefe axial durchsetzenden Aufnahme ausgeformt. Dies lässt sich besonders vorteilhaft und einfach unter Verwendung mindestens eines Mittels zur Erzeugung einer Hinterschneidung realisieren, beispielsweise unter Verwendung mindestens eines Schiebers, der vor Durchführung des Spritzgießverfahrens in das Spritzgießwerkzeug eingeschoben wird, sodass sich auf diese Weise mindestens eine Hinterschneidung anfertigen lässt. Bevorzugt geschieht dies unter Verwendung eines Kernzug-Schiebers. Nach Aushärten des eingespritzten Materials wird anschließend das Mittel zur Erzeugung einer Hinterschneidung, insbesondere der Schieber, aus dem Spritzgießwerkzeug, zumindest aber aus dem gefertigten Spritzgussbauteil, entfernt, sodass ein Entformen des ausgehärteten Spritzgussbauteils möglich ist.

Vorteilhaft kann auf diese Weise eine Aufnahme einer Lasereinheit bereits während des Herstellungsverfahrens des Pendels einstückig mit dem Optikträger des Pendels der Pendelanordnung ausgeformt werden. Insbesondere kann eine besonders definierte, präzise und reproduzierbare Fertigung der Aufnahme einer Lasereinheit realisiert werden, bei Verringerung der Fertigungstoleranzen. Ferner sind im Folgenden keine weiteren Fertigungsschritte wie beispielsweise Zerspanen oder dergleichen sowie keine weiteren Bauteile zur Fertigung der Aufnahme nötig. Somit wird eine effiziente, besonders schnelle und wirtschaftlich günstige Herstellung der Aufnahme einer Lasereinheit zeitgleich mit der Fertigung des Optikträgers realisiert.

In einer vorteilhaften Ausführungsform des erfindungsgemäßen Herstellungsverfahrens werden/wird das Kreuzgelenk und/oder der Optikträger aus duroplastischem Kunststoff mittels Kunststoff-Spritzgießtechnik gefertigt.

Duroplastische Kunststoffe (Duromere) weisen nach ihrer Aushärtung eine extrem hohe und dauerhafte Form- und Temperaturbeständigkeit auf und eignen sich daher bevorzugt zur Herstellung des erfindungsgemäßen Pendels mit dem Gewinn zuverlässiger und dauerhafter Erfüllung der engen Toleranzvorgaben. Darüber hinaus lässt sich eingespritzter duroplastischer Kunststoff vorteilhaft noch in dem Spritzgießwerkzeug, insbesondere bei Raumtemperatur mit Hilfe von Katalysatoren chemisch, oder bevorzugt bei erhöhten Temperaturen thermisch aktivieren und vernetzen und somit aushärten. In einer bevorzugten Ausführungsform des Herstellungsverfahrens kann beispielsweise als Duroplast ein Bulk-Molding-Compound (BMC), eine Phenolformmasse (PF) oder ein Epoxidharz (EP) verwendet werden. Derartige Materialien vernetzen chemisch unter erhöhter Temperatur, beispielsweise insbesondere bei 130 Grad Celsius bis 180 Grad Celsius, und lassen sich daher vorteilhaft in dem Spritzgießwerkzeug vernetzen und aushärten. Besonders bevorzugt sind diese Materialien mit Verstärkungsstoffen, beispielsweise Glasfasern, Kohlefasern oder dergleichen gefüllt, sodass eine hohe mechanische und thermische Beständigkeit des ausgehärteten Kunststoffs resultiert. Diese hohe mechanische und thermische Beständigkeit verleiht dem gefertigten Pendel, insbesondere dem Kreuzgelenk und dem Optikträger, vorteilhafte physikalisch/technische Eigenschaften, insbesondere hinsichtlich Temperaturstabilität und Stabilität gegenüber mechanischen Einflüssen wie Stößen, Schlägen, Vibrationen oder dergleichen.

In einer bevorzugten Ausführungsform des Herstellungsverfahrens wird ein Duroplast verwendet, der sich während des Aushärtens im Spritzgießwerkzeug geringfügig ausdehnt und/oder mit einer positiven Schwindung eingestellt werden kann. Auf diese Weise können besonders enge Toleranzen des Spritzgießwerkzeugs optimal abgeformt werden. Durch eine derartige hochpräzise Abformung des Spritzgießwerkzeugs kann ebenfalls das zu fertigende Bauelement, insbesondere das Kreuzgelenk und/oder der Optikträger, sehr präzise und in besonders engen Toleranzbereichen gefertigt werden. Ferner kann eine leichte Formschräge des zu gießenden Bauteils, insbesondere des Kreuzgelenks und/oder des Optikträgers, eine leichtere Entformung nach Aushärten des Bauteils bewirken.

Bevorzugt wird ein Duroplast mit einer kurzen Vernetzungszeit verwendet. Unter Verwendung eines Duroplasten mit einer kurzen Vernetzungszeit kann die Dauer, die das Spritzgussbauteil im Spritzgießwerkzeug zum Aushärten verweilt, vorteilhaft reduziert werden und eine effizientere Herstellung der Pendelanordnung erreicht werden.

In einer vorteilhaften Ausführungsform des erfindungsgemäßen Herstellungsverfahrens wird mindestens eine Masse zum Austarieren des Pendelns beim Spritzgießen an den Optikträger angebunden oder in den Optikträger eingebettet.

Bevorzugt wird die Masse zum Austarieren des Pendels während des zweiten Verfahrensschritts des Herstellungsverfahrens, bei dem der Optikträger des Pendels der Pendelanordnung mittels Kunststoff-Spritzgießtechnik einstückig mit dem Kreuzgelenk gefertigt wird, unmittelbar im selben Verfahrensschritt mittels Umspritzen der Masse an den Optikträger angebunden oder in diesen eingebettet. Dazu wird in einer Ausführungsform des Herstellungsverfahrens die Masse noch vor Verschließen des Spritzgießwerkzeugs in dieses an geeigneter Stelle und in geeigneter Ausrichtung eingelegt. Unter "anbinden/einbetten mittels Umspritzen" soll insbesondere verstanden werden, dass die Masse zum Austarieren im Spritzgießverfahren fest und innig, insbesondere form- und kraftschlüssig, mit dem Optikträger gefertigt und verbunden wird, sodass Optikträger und Masse bevorzugt nicht als mehrere aneinander gefügte Bauteile erscheinen und jedenfalls nicht mehr voneinander gelöst werden können, ohne dabei zerstört zu werden. "Umspritzen" meint insbesondere nicht notwendigerweise das vollständige Umhüllen der Masse mit Kunststoff, sondern vielmehr die stabile Anbindung der Masse durch um-, an- bzw. einspritzen und anschließendes bevorzugt passgenaues Aushärten des Kunststoffs, wobei die Masse zum Austarieren positionsstabil an den Optikträger angebunden wird. Besonders vorteilhaft lässt sich auf diese Weise ein Austarieren des Pendels sehr präzise, definiert und reproduzierbar bereits im Herstellungsverfahren des Optikträgers durchführen, sodass ein nachträgliches, zeitaufwendiges Austarieren mit an dem Optikträger nachträglich anzubringenden oder zu justierenden Massen umgangen wird.

Alternativ und/oder zusätzlich lässt sich unter Anwendung der gleichen technischen Lehre auch ein Metall zur Realisierung einer Wirbelstromdämpfung nach dem Prinzip des Waltenhof'schen Pendels unmittelbar im selben Verfahrensschritt mittels Umspritzen des Metalls an den Optikträger anbinden oder in diesen einbetten.

In einer vorteilhaften Ausführungsform des erfindungsgemäßen Herstellungsverfahrens wird der Optikträger zumindest teilweise in einem Mehrkomponenten-Spritzgießverfahren, insbesondere in einem mehrstufigen Spritzgießverfahren, unter Verwendung von Metall gefertigt und insbesondere hinsichtlich einer Masseverteilung austariert.

Vorteilhaft lässt sich auf diese Weise in erfindungsgemäßem Herstellungsverfahren eine erste Komponente in das Spritzgießwerkzeug einspritzen, während ein Mittel zur Erzeugung einer Hinterschneidung, insbesondere ein seitlicher Schieber oder Kernzug, in das Spritzgießwerkzeug eingeführt ist, sodass nicht der gesamte zur Verfügung stehende Raum des Spritzgießwerkzeugs mit der ersten Komponente ausgefüllt wird. Nach Aushärten dieser ersten Komponente, insbesondere der Kunststoff-Komponente, wird das Mittel zur Erzeugung einer Hinterschneidung aus dem Spritzgießwerkzeug entfernt, insbesondere der seitliche Schieber gezogen, sodass eine Kavität freigegeben wird. Diese Kavität kann vorteilhaft benutzt werden, um in einem unmittelbar anschließenden weiteren Spritzgießverfahrensschritt eine zweite Komponente in das Spritzgießwerkzeug, insbesondere die freigegebene Kavität, einzuspritzen und somit vorteilhaft an die erste Komponente des bereits gefertigten Spritzgussbauteils anzubinden. Bevorzugt handelt es sich bei der zweiten Komponente um eine metallhaltige Spritzgießmasse, in einer bevorzugten Ausführungsform beispielsweise um eine Metall-Pulver beinhaltende Kunststoff-Masse, die vorteilhaft zur Platzierung eines zusätzlichen Gewichts an definierter Stelle des Optikträgers verwendet wird. Bevorzugt kann derart beispielsweise ein besonders fein definiertes und reproduzierbares Austarieren des Optikträgers bereits im Herstellungsverfahren des Optikträgers realisiert werden, ohne dass ein nachträgliches, zeitaufwendiges Austarieren mit an dem Optikträger nachträglich anzubringenden oder zu justierenden Massen hinfällig wird.

Alternativ und/oder zusätzlich lässt sich unter Anwendung der gleichen technischen Lehre auch ein Metall zur Realisierung einer Wirbelstromdämpfung nach dem Prinzip des Waltenhof'schen Pendels unmittelbar im selben Verfahrensschritt mittels Einspritzen einer metallhaltigen Materialkomponente an den Optikträger anbinden.

In einer vorteilhaften Ausführungsform des erfindungsgemäßen Herstellungsverfahren wird in einem weiteren Verfahrensschritt eine Pendelaufhängung mittels Kunststoff-Spritzgießtechnik gefertigt, insbesondere als zweiteiliges, zusammensteckbares Bauteil gefertigt.

Bevorzugt wird die Pendelaufhängung derart ausgeformt, dass vorteilhaft eine Anordnung des Kreuzgelenks unter Verwendung mindestens eines Wälzlagers des Kreuzgelenks an der Pendelaufhängung derart realisiert werden kann, dass eine rotative Drehbewegung des Kreuzgelenks um die durch dieses Wälzlager vorgegebene Wellenachse in zumindest einem Winkelbereich möglich ist. Vorteilhaft wird dies durch Verwendung eines insbesondere zweiteiligen, stabil zusammensteckbaren Pendelaufhängung-Bauteils ermöglicht. Dazu weist das zusammensteckbaren Pendelaufhängung-Bauteil bevorzugt einen Hohlraum auf, der geeignet ist, zur Anordnung des Kreuzgelenks zumindest ein Wälzlager zumindest teilweise derart zu umfassen, dass eine stabile Anordnung des Kreuzgelenks an die Pendelaufhängung gewährleistet ist, wobei gleichzeitig eine freie Beweglichkeit des Kreuzgelenks um die durch dieses Wälzlager definierte Wellenachse zumindest in einem Winkelbereich uneingeschränkt möglich ist. Insbesondere beträgt dieser Winkelbereich mehr als 15 Grad, bevorzugt mehr als 30 Grad, besonders bevorzugt mehr als 45 Grad.

Durch Verwendung einer zusammensteckbaren, insbesondere zweiteiligen, Pendelaufhängung, die in einem Hohlraum zwischen beiden zusammensteckbaren Teilen zumindest ein Wälzlager des Kreuzgelenks zumindest teilweise umfasst und stabil befestigt, kann in erfindungsgemäßem Herstellungsverfahren der Pendelaufhängung eine besonders präzise Befestigung und Führung des Kreuzgelenkes unter Einhaltung enger Toleranzen vorgesehen werden. Ferner kann die Pendelaufhängung mittels Kunststoff-Spritzgießtechnik besonders einfach, reproduzierbar und insbesondere auch wirtschaftlich vorteilhaft und kostengünstig gefertigt werden. Zur Herstellung der Pendelaufhängung mittels Kunststoff-Spritzgießtechnik ist ein weiteres, insbesondere drittes, Spritzgießwerkzeug derart vorgeformt, dass infolge des Einspritzens von Kunststoff eine insbesondere zweistückige, zusammensteckbare Pendelaufhängung gewünschter Form entsteht.

Bevorzugt weisen die zusammensteckbaren Bestandteile der Pendelaufhängung ferner Mittel auf zur Realisierung einer Halte- und/oder Rastverbindung in zusammengestecktem Zustand, beispielsweise Haken und Öse, Clips oder dergleichen.

In einer vorteilhaften Ausführungsform des erfindungsgemäßen Herstellungsverfahrens wird die Pendelaufhängung aus thermoplastischem Kunststoff, insbesondere glasfaserverstärktem thermoplastischen Kunststoff, mittels Kunststoff-Spritzgießtechnik gefertigt.

Thermoplaste stellen dabei einen Kompromiss aus mechanischer Verformbarkeit - benötigt zum stabilen Zusammenstecken der Pendelaufhängung, insbesondere beispielsweise zur Realisierung von Hak- und/oder Clip-Verbindungen - sowie thermischer und mechanischer Stabilität dar, die zur Erreichung und Einhaltung sehr enger Toleranzanforderungen des Bauteils vorteilhaft sind. Darüber hinaus zeichnet sich thermoplastischer Kunststoff durch die Fähigkeit zur Absorption mechanischer Einflüsse, insbesondere beispielsweise von Stößen und Vibrationen oder dergleichen, aus. Ferner härtet auch thermoplastischer Kunststoff unter Einfluss erhöhter Temperaturen aus. In einer bevorzugten Ausführungsform kann der thermoplastische Kunststoff beispielsweise als Polyamid (PA) oder Polybutylenterephthalat (PBT) mit 40 % Glasfaseranteil als Verstärkungsstoff gewählt sein.

In einer vorteilhaften Ausführungsform des erfindungsgemäßen Herstellungsverfahrens wird in einem weiteren Verfahrensschritt das Pendel pendelbar an der Pendelaufhängung angeordnet.

Vorteilhaft wird das Pendel unter Verwendung zumindest eines Wälzlagers pendelbar an der Pendelaufhängung angeordnet. Bevorzugt umschließt dazu die Pendelaufhängung zumindest ein Wälzlager des Kreuzgelenks und fixiert dieses bezüglich einer der frei gegeneinander beweglichen Wälzlagerkomponenten, insbesondere einem inneren oder einem äußeren Ring des Wälzlagers, wobei die rotative Beweglichkeit des Kreuzgelenks bezogen auf die Wellenachse des Wälzlagers, das durch die Pendelaufhängung fixiert wird, zumindest in einem Winkelbereich nicht behindert wird. Insbesondere beträgt dieser Winkelbereich mehr als 15 Grad, bevorzugt mehr als 30 Grad, besonders bevorzugt mehr als 45 Grad. Durch Verwendung der im Spritzgießverfahren gefertigten Pendelaufhängung kann in erfindungsgemäßem Herstellungsverfahren das Pendel mit hoher Präzision, besonders definiert und zügig an der Pendelaufhängung unter Einhaltung enger Toleranzen angeordnet werden. Die Verwendung weiterer Hilfsmittel zur präzisen Anpassung und Befestigung, insbesondere auch ein Nacharbeiten und Austarieren des Pendels an der Pendelaufhängung, sind überflüssig, sodass vorteilhaft eine Beschleunigung des Herstellungsverfahrens erreicht wird.

Unter Verwendung von Mitteln zur Realisierung einer Halte- und/oder Rastverbindung in zusammengestecktem Zustand der Pendelaufhängung kann entweder eine lösbare oder alternativ eine unlösbare Steckverbindung ausgeführt sein.

In einer vorteilhaften Ausführungsform des erfindungsgemäßen Herstellungsverfahrens wird in einem weiteren Verfahrensschritt die Pendelanordnung bestehend aus Pendel und Pendelaufhängung in einer Pendellaservorrichtung montiert.

Vorteilhaft kann auf diese Weise eine wirtschaftlich besonders günstige Montierung der Pendelanordnung in einer Pendellaservorrichtung erfolgen, da die Pendelanordnung bereits in den vorherigen Verfahrensschritten des Herstellungsverfahrens montierbereit vorgefertigt ist. Besonders vorteilhaft kann daher auf eine aufwendige Montierung unter Verwendung einer Vielzahl von Einzelschritten und/oder einer Vielzahl von Einzelbauteilen sowie Werkzeugen verzichtet werden. Ebenfalls ist eine präzise Ausrichtung der Pendelanordnung, insbesondere des Optikträgers des Pendels sowie der in dem Optikträger vorhandenen Aufnahme zur Aufnahme einer Lasereinheit, bereits in den vorherigen Verfahrensschritten durchgeführt worden, sodass ein langwieriges Austarieren der Pendelanordnung nach deren Montierung in einer Pendellaservorrichtung vermieden wird. Folglich stellt sich die Montierung der Pendelaufhängung in eine Pendellaservorrichtung besonders definiert, präzise und reproduzierbar, somit also auch besonders einfach und wirtschaftlich vorteilhaft, dar.

Ferner wird eine erfindungsgemäße selbstnivellierende Pendellaservorrichtung vorgeschlagen, die zumindest ein Gehäuse, ein in dem Gehäuse mittels Pendelaufhängung pendelbar angeordnetes Pendel sowie zumindest eine an einem Optikträger des Pendels angebrachte Lasereinheit zur Erzeugung zumindest einer optischen Markierung aufweist, hergestellt nach erfindungsgemäßem Verfahren, wobei ein Kreuzgelenk des Pendels und der Optikträger des Pendels mittels Kunststoff-Spritzgießtechnik einstückig, insbesondere form- und kraftschlüssig, realisiert sind und wobei eine Komponente des Wälzlagers, insbesondere eines inneren oder eines äußeren der zueinander beweglich gelagerten Ringe des Wälzlagers, durch um-, an- bzw. einspritzen und anschließendes Aushärten des Kunststoffs angebunden wird, wobei die Funktionalität des Wälzlagers uneingeschränkt erhalten bleibt.

In einer vorteilhaften Ausführungsform der selbstnivellierenden Pendellaservorrichtung weisen die Wälzlager des Kreuzgelenks zumindest eine, die Haftung der Wälzlager verbessernde Oberflächenstruktur auf.

### Zeichnungen

Die Erfindung ist anhand von in den Zeichnungen dargestellten Ausführungsbeispielen in der nachfolgenden Beschreibung näher erläutert. Die Zeichnung, die Beschreibung und die Ansprüche enthalten zahlreiche Merkmale in Kombination.

Der Fachmann wird die Merkmale zweckmäßigerweise auch einzeln betrachten und zu sinnvollen weiteren Kombinationen zusammenfassen. Gleiche Bezugszeichen in den Figuren bezeichnen gleiche Elemente.

Es zeigen:
- Figur 1: perspektivische Darstellung einer Ausgestaltung der erfindungsgemäßen Pendellaservorrichtung
- Figur 2: perspektivische Darstellung einer Ausgestaltung der erfindungsgemäßen Pendellaservorrichtung im Schnitt
- Figur 3: perspektivische Darstellung einer Ausgestaltung eines erfindungsgemäßen Kreuzgelenks
- Figur 4: perspektivische Darstellung einer Ausgestaltung eines erfindungsgemäßen Pendels
- Figur 5: schematische Ansicht eines Schnitts einer Ausgestaltung einer Pendelaufhängung, an der ein Pendel angeordnet ist
- Figur 6: Ausführungsformen einer die Haftung der Wälzlager verbessernden Oberflächenstruktur
- Figur 7: Verfahrensdiagramm einer Ausgestaltung des erfindungsgemäßen Herstellungsverfahrens
- Figur 8: schematische Schnitt-Ansicht einer Ausgestaltung eines ersten Spritzgießwerkzeugs, in dem sich ein Kreuzgelenk befindet
- Figur 9: schematische Schnitt-Ansicht einer Ausgestaltung eines weiteren Spritzgießwerkzeugs, in dem sich ein Kreuzgelenk und ein mit dem Kreuzgelenk einstückig ausgebildeter Optikträger befinden

### Beschreibung der Ausführungsbeispiele

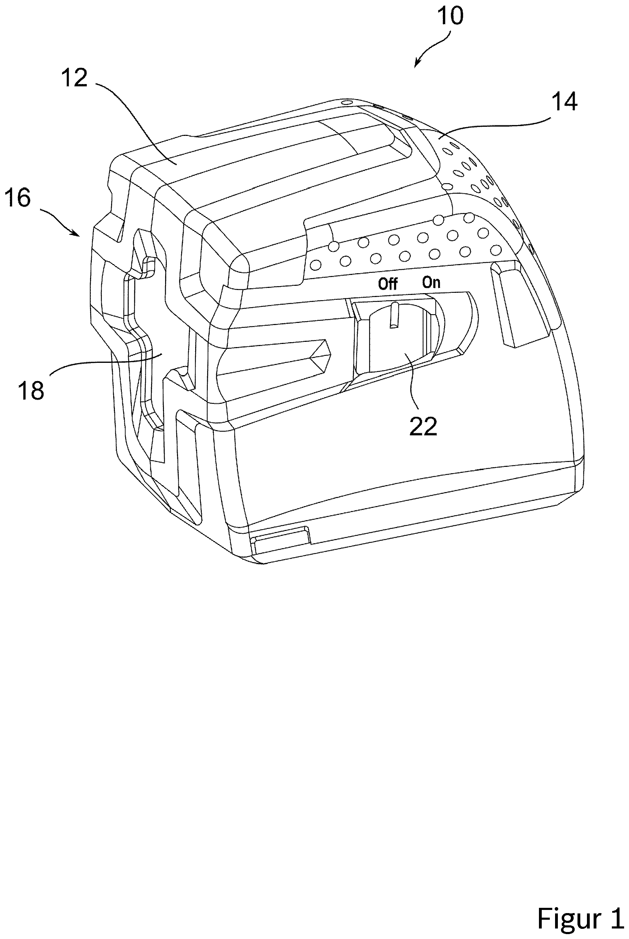

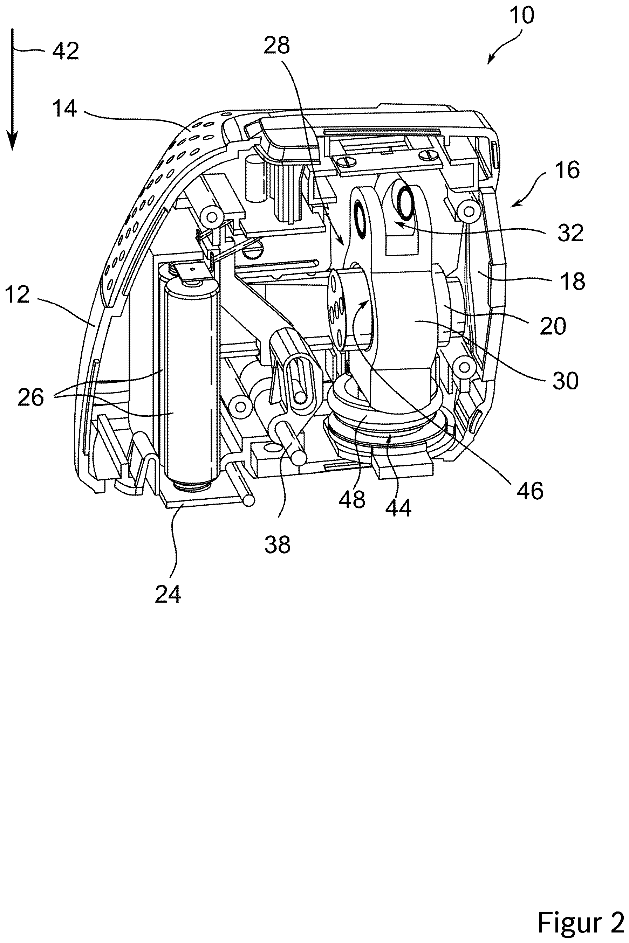

Die Darstellung der Figur 1 zeigt eine Ausführungsform einer erfindungsgemäßen Pendellaservorrichtung 10 in einer perspektivischen Seitenansicht. Die Pendellaservorrichtung 10 weist ein im Wesentlichen würfelförmiges Gehäuse 12 mit Kantenlängen in einem Bereich von 4 bis 15 cm, vorteilhafter Weise in einem Bereich von 5 bis 10 cm und besonders vorteilhaft im Bereich von 5 bis 7 cm auf. Das Gehäuse 12 besteht vorzugsweise im Wesentlichen aus einem polymeren Werkstoff oder einem beispielsweise faserverstärkten Verbundwerkstoff (z.B. faserverstärkter Duroplast oder Thermoplast). Das Gehäuse 12 umgibt die mechanischen Komponenten, optischen sowie elektronischen Bestandteile (vergleiche insbesondere Figur 2) der Pendellaservorrichtung 10 und schützt diese vor mechanischer Beschädigung und vermindert die Gefahr von Verunreinigungen. Zur Reduzierung der schädlichen Einwirkungen von Stößen gegen die Pendellaservorrichtung 10, sowie zur komfortableren Handhabung durch den Nutzer, ist das Gehäuse 12 teilweise mit einer Soft-Grip-Komponente 14 belegt. Auf der Frontseite 16 der Pendellaservorrichtung 10 ist eine Öffnung in dem Gehäuse 12, insbesondere eine Austrittsöffnung 18, vorgesehen. Durch die Austrittsöffnung 18 kann ein optisches Signal, insbesondere eine von einer im Gehäuse 12 angeordneten Lasereinheit 20 (vgl. insbesondere Figur 2) ausgesendete Laserstrahlung zur Erzeugung zumindest einer Lasermarkierung auf einem Objekt, aus dem Gehäuse 12 austreten.

Die Austrittsöffnung 18 ist vorteilhaft mit einem für das optische Spektrum des optischen Signals transparenten, zumindest jedoch transluzenten Fensterelement (nicht näher dargestellten) versehen, sodass das Innere der Pendellaservorrichtung 10 vorteilhaft vor Beschädigungen und Umwelteinflüssen, beispielsweise vor dem Eindringen von Feuchtigkeit und Staub, geschützt wird.

Seitlich am Gehäuse 12 der Pendellaservorrichtung 10 befindet sich ein Schalter 22, dessen Betätigung die im Gehäuse 12 angeordnete Elektronik, insbesondere die Energieversorgung der Lasereinheit 20, aktiviert/deaktiviert.

In Figur 1 nicht näher darstellt ist ein auf der Unterseite des Gehäuses 12 der Pendellaservorrichtung 10 untergebrachtes Batteriefach. Das Batteriefach bildet mit seinem Batteriefachdeckel 24 einen wesentlichen Bestandteil der Oberfläche des Gehäuses 12. Das Batteriefach dient der Aufnahme von Batterien 26 oder auch Akkumulatoren zur Energieversorgung der Pendellaservorrichtung 10 (vgl. insbesondere Figur 2).

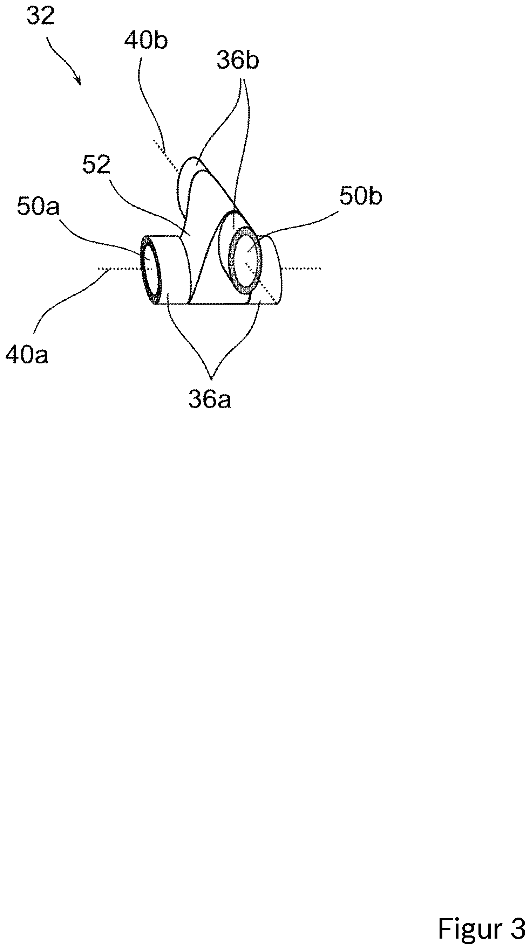

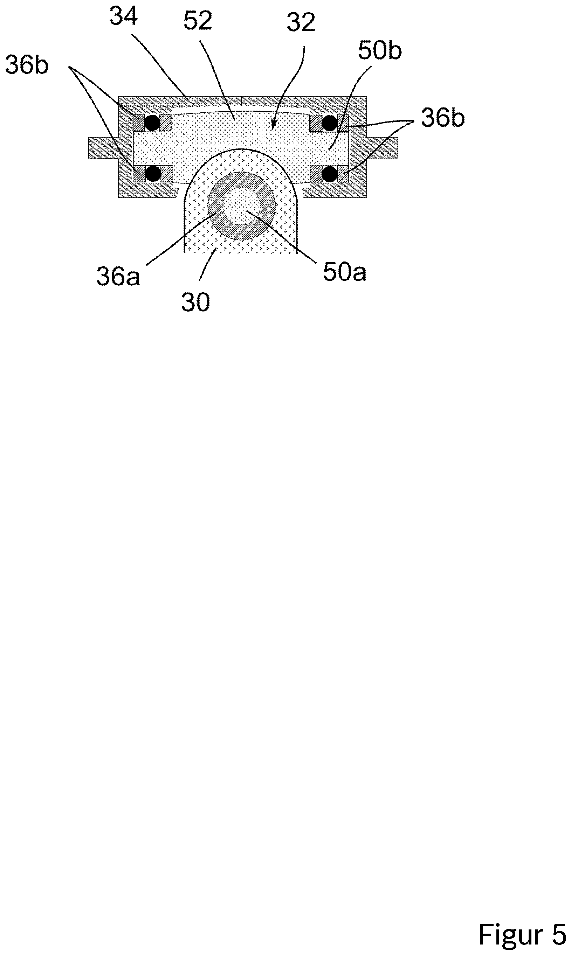

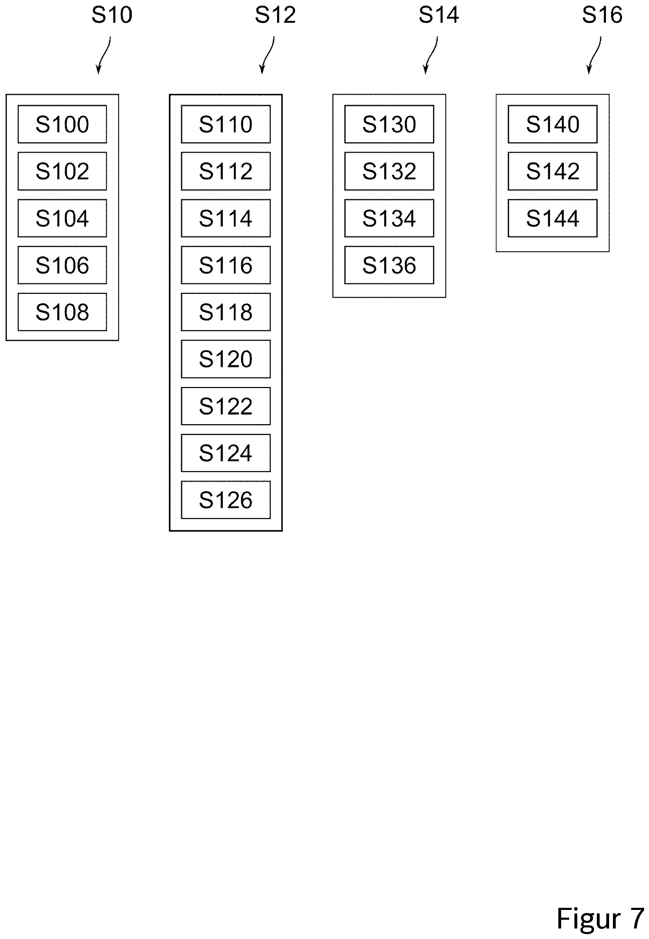

Figur 2 zeigt die gleiche Ausführungsform der Pendellaservorrichtung 10 aus Figur 1 in einem seitlichen Querschnitt. Neben den in Figur 1 dargestellten Merkmalen ist der Deckel des Batteriefaches 24 mit dahinter, im Inneren des Gehäuses 12 der Pendellaservorrichtung 10 angeordneten Batterien 26 zu erkennen. Zentralen und funktionswesentlichen Gegenstand der Pendellaservorrichtung 10 stellt die Pendelanordnung bestehend aus Pendel 28 und einer hier nicht näher dargestellten Pendelaufhängung 34 dar (vgl. hierfür insbesondere Figur 5). Das Pendel 28 besteht in der dargestellten Ausführungsform aus einem Optikträger 30 und einem Kreuzgelenk 32, das unter Verwendung der nicht näher dargestellten Pendelaufhängung 34 und unter Verwendung von Wälzlagern 36a,36b (vgl. insbesondere Figur 3), insbesondere in Form einer kardanischen Lagerung, an dem Gehäuse 12 oder einem fest mit dem Gehäuse 12 der Pendellaservorrichtung 10 verbundenen Bestandteil befestigt ist. Die Komponenten des Pendels 28, d.h. Optikträger 30 und Kreuzgelenk 32, sind - abgesehen von den Wälzlagern 36a,36b - im Wesentlichen aus einem faserverstärkten duroplastischen Kunststoff mittels Kunststoff-Spritzgießtechnik hergestellt. Der Optikträger 30 dient der Aufnahme der wesentlichen optischen Elemente der Pendellaservorrichtung 10, hier vereinfacht dargestellt in Form einer Lasereinheit 20. Die Pendelaufhängung 34 ist aus thermoplastischem Kunststoff mittels Kunststoff-Spritzgießtechnik hergestellt (vgl. insbesondere Figuren 7-9).

Sofern das Pendel 28 nicht mittels einer Arretiervorrichtung 38 in einer eingenommenen Position arretiert wird, richtet sich das Pendel 28 selbstnivellierend um zwei Achsen, insbesondere zwei Wellenachsen 40a,40b des Kreuzgelenks 32 (vgl. insbesondere Figur 3), insbesondere unabhängig von der Ausrichtung des Gehäuses 12, allseitig frei im Gravitationsfeld der Erde aus. Der Winkelbereich der Ausrichtung des Gehäuses 12, in dem die selbstnivellierende Eigenschaft des Pendels 28, insbesondere dessen präzise Ausrichtung am Lot 42, gewährleistet ist, umfasst insbesondere 5 Grad bis 15 Grad von der Lotrechten, typischerweise 5 Grad oder 8 Grad. Sofern die Pendellaservorrichtung 10 eingeschaltet ist, sendet die Lasereinheit 20 optische Signale, insbesondere zumindest eine Laserebene, aus, die aus dem Gehäuse 12 durch die Austrittsöffnung 18 austritt, um eine optische Markierung, insbesondere zumindest eine Markierungslinie, auf einem Objekt zu erzeugen (eine Darstellung der Verkabelung der Lasereinheit 20 ist aus Gründen der Übersichtlichkeit ausgelassen).

Um die Einschwingdauer des im Rahmen des technisch Möglichen möglichst reibungsfrei aufgehängten Pendels 28 zu verkürzen, ohne die Einstellgenauigkeit der Endposition des Pendelns 28 im Gravitationsfeld zu verringern, weist das Pendel 28 eine Vorrichtung zur Wirbelstromdämpfung 44 nach dem Prinzip des Waltenhof'schen Pendels auf. Vorteilhaft wird somit erreicht, dass sich das Pendel 28 der Pendellaservorrichtung 10 - und damit auch der Optikträger 30 samt Lasereinheit 20 - nach dem Aufstellen der Pendellaservorrichtung 10 oder einem Stoß gegen den Pendellaservorrichtung 10 innerhalb kurzer Zeit, insbesondere innerhalb von 0,5 bis 5 Sekunden mit einer hohen Genauigkeit von wenigen zehnteln Millimeter im Gravitationsfeld der Erde ausrichtet. Insbesondere weist die Vorrichtung zur Wirbelstromdämpfung 44 eine Metallplatte 48 an der Unterseite des Pendels 28, insbesondere des Optikträgers 30, auf, das mittels Spritzgießtechnik einstückig, insbesondere form- und kraftschlüssig, mit diesem ausgebildet ist.

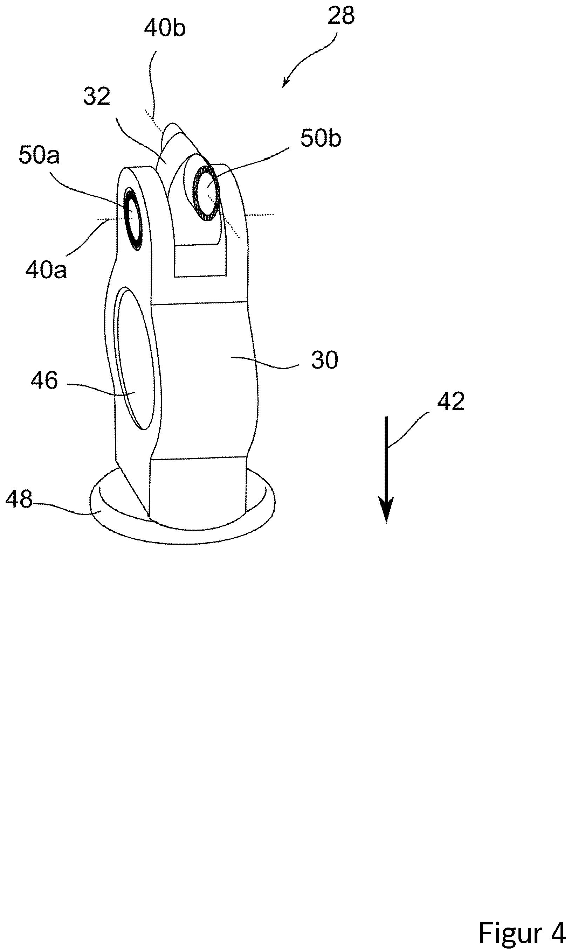

Die Aufnahme 46 des Pendels 28 der Pendellaservorrichtung 10 dient der Aufnahme und der präzisen Ausrichtung der Lasereinheit 20 in Bezug auf das Pendel 28 der Pendellaservorrichtung 10 und - da sich das Pendel frei gemäß Schwerefeld ausrichtet - in Bezug auf das Lot 42. In dem dargestellten Ausführungsbeispiel ist die Lasereinheit 20 in eine den Grundkörper des Optikträgers 30 axial durchsetzende Aufnahme 46 eingefügt (vgl. insbesondere auch Figur 4) und mit der Aufnahme 46 über nicht näher dargestellte Befestigungsmittel stabil verbunden. Es sei insbesondere angemerkt, dass die Lasereinheit 20 oder auch mehrere Lasereinheiten 20 in einer alternativen Ausführungsform der Aufnahme 46 auch stoff-, kraft und/oder formschlüssig an, in oder auf dem Optikträger 30 angeordnet sein kann.

Die Lasereinheit 20 ist nicht auf die Erzeugung einer speziellen Art der optischen Lasermarkierung beschränkt. Insbesondere kann die Lasereinheit 20 zur Erzeugung punkt- und/oder linienförmiger optischer Lasermarkierungen auf Objekten, genauer zur Projektion punkt- und/oder linienförmiger optischer Lasermarkierungen auf Objekte, oder beliebiger Kombinationen von solchen, vorgesehen sein. Ferner ist das in Figur 1 und Figur 2 dargestellte Ausführungsbeispiel nicht auf die Verwendung einer Aufnahme 46 in Verbindung mit einer Lasereinheit 20 begrenzt. In einer alternativen Ausführungsform der Pendellaservorrichtung 10 können unter Verwendung des gleichen erfindungsgemäßen Herstellungsverfahrens der Pendelanordnung beispielsweise auch mehrere, insbesondere zueinander ausgerichtete Aufnahmen 46', die wiederum je eine Lasereinheit 20" aufweisen, vorgesehen sein und gefertigt werden.

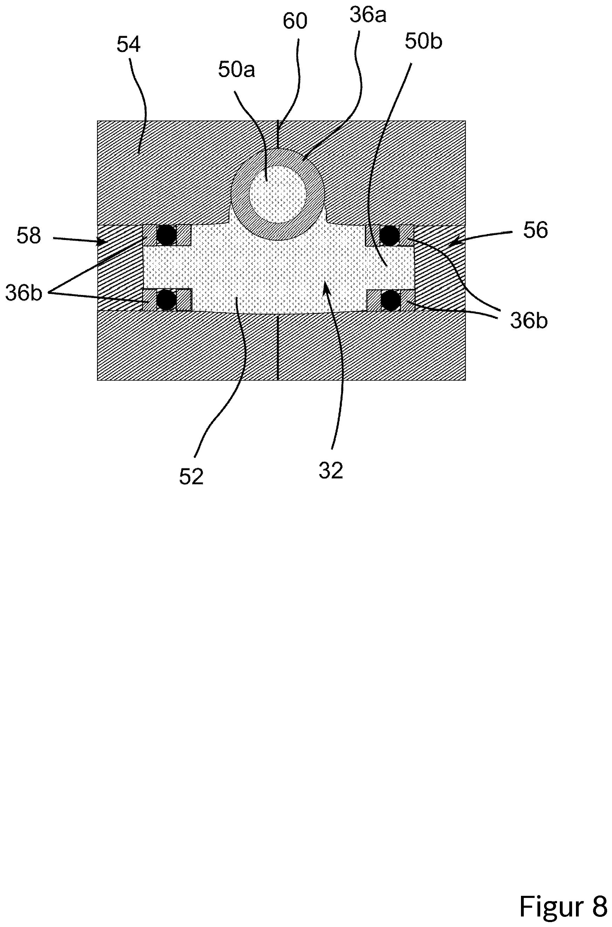

In Figur 3 ist in perspektivischer Darstellung ein Kreuzgelenk 32 des Pendels 28 der Pendelanordnung dargestellt. Das Kreuzgelenk 32 des Pendels 28 ist in erfindungsgemäßem Herstellungsverfahren mittels Kunststoff-Spritzgießtechnik unter Formung zweier zueinander orthogonaler, mit Wälzlagern 36a,36b bestückten Wellen 50a,50b gefertigt. Die Wälzlager 36a,36b sind als Radiallager, insbesondere als Kugellager oder Rollenlager vorgesehen, bestehend aus einem mittels Wälzkörpern nahezu reibungsfrei gegeneinander bewegbaren inneren und einem äußeren Ring. Unter Verwendung radialer Kugel- oder Rollen-Wälzlager 36a,36b, mit denen die Wellen 50a,50b des Kreuzgelenks 32 bestückt sind, kann vorteilhaft eine besonders leichtgängige, insbesondere nahezu reibungsfreie Drehbewegung des Kreuzgelenks 32 um die durch je zwei Wälzlager 36a,36b definierten Wellenachsen 40a,40b realisiert werden. Die Wälzlager 36a,36b sind im Kunststoff-Spritzgießverfahren unmittelbar mit dem Kunststoffgrundkörper 52 des Kreuzgelenks 32 einstückig, insbesondere form- und kraftschlüssig, ausgebildet, indem Kunststoff, bevorzugt faserverstärkter duroplastischer Kunststoff, im Kunststoff-Spritzgießverfahren in die Wälzlager 36a,36b eingespritzt wird, sodass eine Anbindung des inneren Rings der Wälzlager mit dem Kunststoff gewährleistet ist. Vorteilhaft bleibt der äußere Ring eines jeden Wälzlagers 36a,36b unbenetzt von Kunststoff, sodass eine freie, rotative Bewegung des äußeren Rings eines jeden Wälzlagers 36a,36b ungehindert möglich ist. Das erfindungsgemäße Spritzgießverfahren zur Herstellung des Kreuzgelenks 32 ist in Figur 7 und in Figur 8 dargestellt.

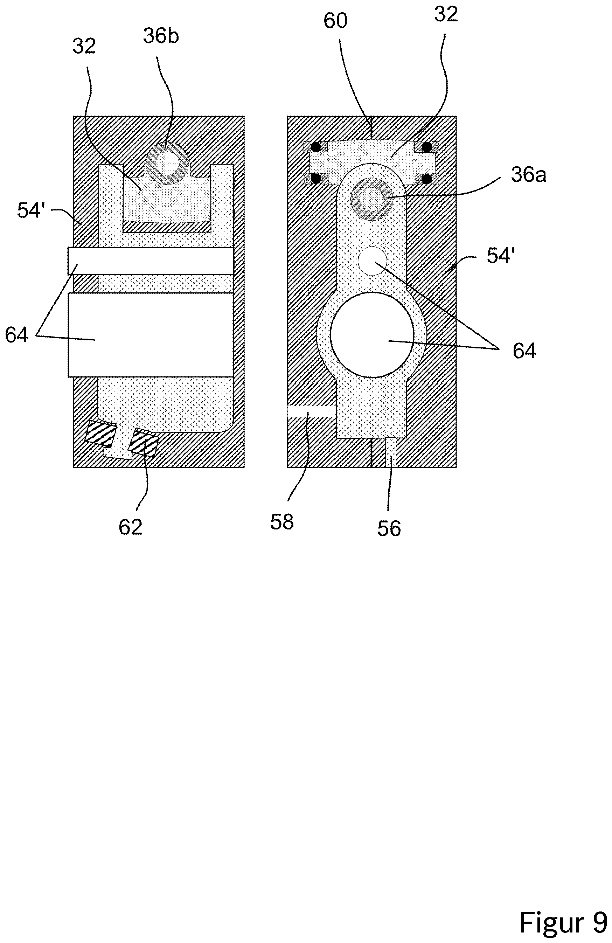

Figur 4 zeigt eine perspektivische Darstellung einer Ausführungsform des Pendels 28, bestehend aus Kreuzgelenk 32, Optikträger 30 sowie einer Metallplatte 48 zum aus Austarieren des Pendels 28, die gleichzeitig auch als Gegenstück einer Wirbelstrombremse 44 dient. Der Optikträger 30 ist in zumindest in einem Winkelbereich frei beweglich um die Wellenachse 40a des Kreuzgelenks 32 rotativ drehbar, d.h. pendelbar gelagert, wobei dieser Winkelbereich insbesondere mehr als 15 Grad, bevorzugt mehr als 30 Grad, besonders bevorzugt mehr als 45 Grad umfasst. Der Optikträger 30 wird von einer Aufnahme 46 axial in seiner Tiefe durchsetzt. Die Aufnahme 46 dient der Aufnahme und Befestigung einer Lasereinheit 20 an dem Optikträger 30. Der Optikträger 30 des Pendels 28 der Pendelanordnung ist aus Kunststoff, bevorzugt aus verstärktem duroplastischem Kunststoff, mittels Spritzgießtechnik in Anwendung des erfindungsgemäßen Herstellungsverfahren einstückig, insbesondere form- und kraftschlüssig, mit dem Kreuzgelenk 32, insbesondere mit zwei eine Welle 50a definierenden Wälzlagern 36a (vgl. insbesondere Figur 3) gefertigt. Die Aufnahme 46 wird in demselben Verfahrensschritt des erfindungsgemäßen Herstellungsverfahrens unter Verwendung zumindest eines Mittels zur Erzeugung einer Hinterschneidung mittels Kunststoff-Spritzgießtechnik ausgeformt. Das in Figur 4 gezeigte Pendel 28 wird unter Verwendung der zwei weiteren, eine weitere Welle 50b definierenden Wälzlagern 36b (vgl. insbesondere Figur 3) an einer hier nicht näher dargestellten Pendelaufhängung 34 ebenfalls um die Wellenachse 40b der Welle 50b in zumindest einem Winkelbereich frei pendelbar angeordnet (vgl. insbesondere Figur 5). Eine Darstellung des Herstellungsverfahrens des Optikträgers 30 ist in Figur 7 und Figur 9 gegeben.

In Figur 5 ist ein schematischer Schnitt dargestellt, der das Kreuzgelenk 32 mit zwei zueinander orthogonalen Wellen 50a, 50b und den einstückig damit ausgebildeten Wälzlagern 36a,36b sowie den Ansatz eines an Wälzlagern 36a einstückig ausgebildeten Optikträgers 30 darstellt. Die freie Welle 50b samt Wälzlagern 36b des Kreuzgelenks 32 wird zu Zwecken der Anordnung des Pendels 28 an dem Gehäuse 12 der Pendellaservorrichtung 10 derart von zwei Komponenten der Pendelaufhängung 34 umfasst, dass eine Fixierung der Wälzlager 36b in der Pendelaufhängung 34 gewährleistet ist, ohne die freie rotative Beweglichkeit des Kreuzgelenks 32 um die Welle 50b durch die Pendelaufhängung 34 zumindest in einem Winkelbereich zu behindern. Dieser Winkelbereich umfasst insbesondere mehr als 15 Grad, bevorzugt mehr als 30 Grad, besonders bevorzugt mehr als 45 Grad. Die Pendelaufhängung 34 wird in erfindungsgemäßen Herstellungsverfahren mittels Kunststoff-Spritzgießtechnik aus Kunststoff, bevorzugt aus faserverstärktem thermoplastischem Kunststoff, gefertigt, insbesondere als zweiteiliges, zusammensteckbares Bauteil. Bevorzugt weisen die zusammensteckbaren Komponenten des Bauteils nicht näher dargestellte Mittel zur Realisierung einer Hak- und/oder Rastverbindung auf. Das erfindungsgemäße Herstellungsverfahren zur Fertigung der Pendelaufhängung 34 ist in Figur 7 näher dargestellt.

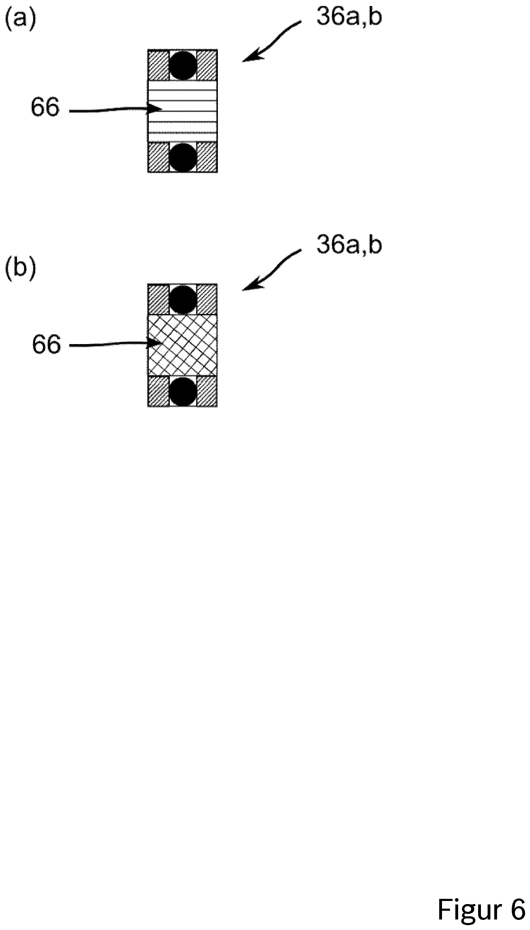

Figur 6 zeigt zwei beispielhafte Ausführungsformen eines Wälzlagers 36a,36b mit Oberflächenstrukturen 66 der Oberflächen der Wälzlager 36a,36b unterschiedlicher Muster, die bevorzugt flächendeckend auf der Innen- und Außenfläche des inneren bzw. äußeren Rings des Wälzlagers 36a,36b vorgesehen sind. Die Oberflächenstruktur 66 ist geeignet, eine Verbesserung der Haftung zwischen einge- bzw. umspritztem Kunststoff sowie Wälzlager 36a,36b zu bewirken. Die Oberflächenstruktur 66 ist plastisch dreidimensional ausgeformt, beispielsweise unter Verwendung eines Querrillen- (a) oder Kreuzmusters (b). Die Oberflächenstruktur 66 wirkt mechanisch stabilisierend, sobald der Kunststoff ausgehärtet ist. Die Oberflächenstruktur 66 stellt dabei eine bessere Angriffsfläche dar, die eine Verzahnung von Wälzlager 36a,36b und ausgehärtetem Kunststoff bewirkt und somit ein Gleiten, Rutschen oder anderweitiges Bewegen von Wälzlager 36a,36b und eingespritztem Kunststoff zueinander verhindert.

Figur 7 zeigt in einem schematischen Verfahrensdiagramm die wesentlichen Verfahrensschritte des erfindungsgemäßen Herstellungsverfahrens. In einem ersten Verfahrensschritt S10, der sich wiederum in Unterschritte S100 bis S108 untergliedert, wird ein Kreuzgelenk 32 des Pendels 28 der Pendelanordnung mittels Kunststoff-Spritzgießtechnik unter Formung zweier orthogonaler, mit Wälzlagern 36a,36b bestückten Wellen 50a,50b gefertigt. In der dargestellten Ausführungsform des ersten Verfahrensschritts S10 werden zunächst Wälzlager 36a,36b in ein insbesondere zweihälftiges Spritzgießwerkzeug 54 eingelegt und ausgerichtet, dargestellt in Verfahrensschritt S100. Bevorzugt sind dabei zwei Wälzlager 36a und zwei Wälzlager 36b derart angeordnet, dass sie je eine zueinander orthogonal ausgerichtete Welle 50a und 50b sowie je eine zueinander orthogonale Achse der Rotation, die Wellenachsen 40a und 40b, definieren (vgl. insbesondere Figur 3). Das Spritzgießwerkzeug 54 wird anschließend in Verfahrensschritt S102 geschlossen. Unter Verwendung einer Einspritzdüse wird anschließend in Verfahrensschritt S104 insbesondere faserverstärkter duroplastischer Kunststoff, beispielsweise Bulk-Molding-Compound (BMC), eine Phenolformmasse (PF) oder ein Epoxidharz (EP) in die Kavität des Spritzgießwerkzeugs 54 eingespritzt, wobei der Kunststoff den zur Verfügung stehenden Raum der Kavität raumfüllend ausfüllt. Dabei werden die Wälzlager 36a,36b zumindest teilweise umspritzt und eine gute Benetzung und Anbindung der exponierten Komponenten oder Bereiche der Wälzlager 36a,36b bewirkt. Bevorzugt ist das Spritzgießwerkzeug 54 derart geformt und die Wälzlager derart in das Spritzgießwerkezeug 54 eingelegt, dass die Wälzlager 36a,36b an den Wellen 50a,50b derart angebunden werden, dass der innere Ring des radialen Wälzlagers 36a,36b fest mit einer Welle 50a,50b des Kreuzgelenks 32 verbunden ist, während der äußere Ring des Wälzlagers 36a,36b frei drehbar bezüglich der jeweiligen Wellenachse 40a,40b des Kreuzgelenks 32 gelagert ist. Vorteilhaft kann auf diese Weise eine freie Rotation des Kreuzgelenks um eine entsprechende Welle 50a,50b relativ zu dem jeweiligen äußeren Ring des Wälzlagers 36a,36b gewährleistet werden.

Zur Verbesserung der Anbindung der Wälzlager 36a,36b an den entstehenden Grundkörper 52 des Kreuzgelenkes 32 weisen die Oberflächen der Wälzlager 36a,36b, insbesondere die Oberflächen des inneren und des äußeren Rings, eine Oberflächenstruktur 66 auf, beispielsweise in Querrillen- oder Kreuzmusterung (vgl. Figur 6), die eine Haftung der Wälzlageroberflächen an dem eingespritzten Kunststoff des Grundkörpers 52 verbessert. Nach Beenden des Einspritzvorganges S104 härtet der eingespritzte Kunststoff, insbesondere der Duroplast, unter Temperatureinfluss, insbesondere erhöhter Temperatur, aus (Verfahrensschritt S106). Vorteilhaft wird auf diese Weise unter erhöhter Temperatur, insbesondere zwischen 130 Grad Celsius bis 180 Grad Celsius, der Duroplast thermisch aktiviert und chemisch vernetzt, so dass ein Bauteil hoher mechanischer und thermischer Beständigkeit resultiert. Abschließend wird nach Abkühlen des Spritzgießwerkzeugs 54 dieses in Verfahrensschritt S108 wieder geöffnet und das gefertigte Kreuzgelenk 32 aus dem Spritzgießwerkzeug 54 entnommen.

In einer bevorzugten Ausführungsform des Herstellungsverfahrens wird ein Duroplast verwendet, der sich während des Aushärtens in Verfahrensschritt S106 im Spritzgießwerkzeug 54 geringfügig ausdehnt und/oder mit einer positiven Schwindung eingestellt ist. Auf diese Weise können besonders enge Toleranzen des Spritzgießwerkzeugs 54 optimal abgeformt werden. Durch eine derartige, hochpräzise Abformung des Spritzgießwerkzeugs 54 kann ebenfalls das zu fertigende Bauelement, insbesondere das Kreuzgelenk 32 und/oder der Optikträger 30 in Verfahrensschritt S12, sehr präzise und in besonders engen Toleranzbereichen gefertigt werden.

Bevorzugt wird ein Duroplast mit einer kurzen Vernetzungszeit verwendet. Somit kann die Dauer, die das Spritzgussbauteil im Spritzgießwerkzeug 54 zum Aushärten in Verfahrensschritt S106 verweilt, vorteilhaft reduziert werden und ein effizienterer Herstellungsprozess erreicht werden.
Es sei an dieser Stelle insbesondere auf Figur 8 verwiesen, die in einer schematischen Schnitt-Darstellung ein Spritzgießwerkzeug 54 darstellt, in dem sich vier Wälzlager 36a,36b, insbesondere Radialkugellager, befinden. Zwei dieser Wälzlager 36b befinden sich unmittelbar an der Einspritzseite 56 bzw. an der Auslassseite 58 des Spritzgießwerkzeugs 54. Ferner ist in der Figur 8 eine Trennebene 60 des Spritzgießwerkzeugs 54 zu erkennen, die in Verfahrensschritt S108 der Öffnung des Spritzgießwerkzeugs 54 und somit der Entnahme des gefertigten Kreuzgelenks 32 dient. Die Figur 8 zeigt das Spritzgießwerkzeug 54 im erfindungsgemäßen Herstellungsverfahren zum Zeitpunkt des ersten Verfahrensschritts S10, genauer während des Aushärtens des duroplastischen Kunststoffs in Verfahrensschritt S106.

Figur 7 zeigt weiter einen zweiten Verfahrensschritt S12 des erfindungsgemäßen Herstellungsverfahrens, bei dem ein Optikträger 30 des Pendels 28 der Pendelanordnung mittels Kunststoff-Spritzgießtechnik einstückig, insbesondere form- und kraftschlüssig, mit dem Kreuzgelenk 32 gefertigt wird. Dazu wird in einem ersten Unterschritt S110 das in dem ersten Verfahrensschritt S10 gefertigte Kreuzgelenk 32 in ein weiteres, insbesondere zweites, Spritzgießwerkzeug 54' eingelegt. Ebenfalls können in dem Verfahrensschritt S110 auch weitere Komponenten des Optikträgers 30, insbesondere beispielsweise eine Masse 62 zum Austarieren des Pendels 28 oder eine Metallplatte 48 als Bestandteil einer Wirbelstrombremse 44, oder andere, für den Optikträger 30 notwendige oder sinnvolle Komponenten, in das Spritzgießwerkzeug 54' eingelegt werden. Anschließend wird in Verfahrensschritt S112 das Spritzgießwerkzeug 54' geschlossen. Um während des Spritzgießverfahrens eine Aufnahme 46 zur Aufnahme einer Lasereinheit 20 in dem Optikträger 30 ausformen zu können, wird ein Schieber 64 als Mittel zur Erzeugung einer Hinterschneidung in Verfahrensschritt S114 seitlich in das Spritzgießwerkzeug 54' eingeführt. In Summe entsteht also in dem Spritzgießwerkzeug 54' eine Kavität, die unmittelbar an die Formgrenzen des Spritzgießwerkzeugs 54', den seitlich eingeschobenen Schieber 64, an zwei Wälzlager 36a sowie ggf. weitere Komponenten wie die Masse 62 und/oder die Metallplatte 48 grenzt. Bevorzugt umschließt die Kavität die zwei Wälzlager 36a vollständig. Unter Verwendung einer Einspritzdüse wird in Verfahrensschritt S116 faserverstärkter duroplastischer Kunststoff zur Erzeugung des Optikträgers 30 in das Spritzgießwerkzeug 54' eingespritzt. Der Kunststoff umfließt entsprechend Ausformung der Kavität den seitlich eingeschobenen Schieber, die zwei Wälzlager 36a und die ggf. weiteren Komponenten wie Masse 62 und/oder Metallplatte 48. Nach Aushärten des duroplastischen Kunststoffs in Verfahrensschritt S118 wird der seitlich eingeführte Schieber 64 in Verfahrensschritt 120 wieder aus dem gebildeten Optikträger 30 entfernt. Gegebenenfalls werden an dieser Stelle auch weitere seitlich eingeführte Schieber 64', die zur Erzeugung von Hinterschneidungen des Optikträgers 30 in das Spritzgießwerkzeug 54' eingeführt wurden, ebenfalls aus dem Optikträger 30 entfernt. In weiteren, insbesondere optionalen, Unterverfahrensschritten lassen sich weitere Material-Komponenten in das Spritzgießwerkzeug 54' einspritzen und somit insbesondere an den Optikträger 30 anspritzen (Verfahrensschritt S122). Derartige weitere Material-Komponenten können beispielsweise einem definierten Austarieren des Pendels 28 oder zur Ausgestaltung einer Metallplatte 48 zur Realisierung einer Wirbelstrombremse dienen. In dem optionalen Unterverfahrensschritt S124 härten diese zusätzlich eingespritzten Komponenten ebenfalls aus. Sofern alle Einspritzvorgänge und Aushärtevorgänge insbesondere verschiedener Material-Komponenten beendet sind, wird in Verfahrensschritt S126 das Spritzgießwerkzeug 54' wieder geöffnet und das gefertigte, einstückige Pendel 28 bestehend aus Kreuzgelenk 32 und Optikträger 30 mit Aufnahme 46 sowie gegebenenfalls weiterer Komponenten wie Masse 62 und/oder Metallplatte 48 aus dem Spritzgießwerkzeug 54' entnommen (Verfahrensschritt S126).

Auf diese Weise wird der Optikträger 30 mittels Kunststoff-Spritzgießtechnik einstückig mit dem Kreuzgelenk 32 gefertigt, sodass der Optikträger 30 und das Kreuzgelenk 32 fest und innig, insbesondere form- und kraftschlüssig, miteinander verbunden gefertigt werden und nicht als mehrere aneinander gefügte Bauteile erscheinen. Die Komponenten lassen sich nicht mehr voneinander lösen, ohne dabei zerstört zu werden.

Vorteilhaft wird das Pendel 28 der Pendelanordnung einer Pendellaservorrichtung 10 mit besonders wenigen Montageschritten und besonders wenigen Einzelkomponenten gefertigt. Insbesondere wird auf diese Weise mit lediglich zwei Verfahrensschritten S10 und S12 des Herstellungsverfahrens eine Pendelanordnung gefertigt, bei der die Anzahl verwendeter Bauteile oder Komponenten verringert. Es ist keine aufwendige Herstellung von Einzelkomponenten sowie keine Montage einer Vielzahl von Einzelkomponenten durchzuführen. Ferner werden durch die Fertigung des Pendels 28 nach erfindungsgemäßem Herstellungsverfahren auf aufwendige Bearbeitungs- und/oder Justierschritte, bei denen Einzelkomponenten im Herstellungsverfahren der Pendelanordnung zeit- und kostenintensiv möglichst präzise positioniert und in ihren Führungen aufwendig angepasst werden, überflüssig. Da im erfindungsgemäßen Herstellungsverfahren sowohl das Kreuzgelenk 32 als auch der Optikträger 30 mittels Kunststoff-Spritzgießtechnik aufeinander aufbauend und aufeinander angepasst hergestellt werden, muss keine Anpassung von Positionen sowie keine Anpassung von Gelenkwellen oder Führungen der Wellen 50a,50b und Kugellager in typischerweise aufwendigen Zerspanungsprozessen durchgeführt werden. Ferner werden vorteilhaft Fertigungstoleranzen verringert und die Herstellung der Pendellaservorrichtung hinsichtlich Korrektur und/oder Ausgleich von Fertigungstoleranzen vereinfacht und beschleunigt.

An dieser Stelle sei insbesondere auf Figur 9 verwiesen, die ein Spritzgießwerkzeug 54' in seitlichem Schnitt aus zwei orthogonalen Richtungen gesehen darstellt. In dem zweiteiligen Spritzgießwerkzeug 54', trennbar mittels einer Trennebene 60, befindet sich eingelegt das in einem ersten Verfahrensschritt S10 des erfindungsgemäßen Herstellungsverfahren gefertigte Kreuzgelenk 32. Ferner ist in das Spritzgießwerkzeug 54' eine Masse 62 zum Austarieren des Optikträgers 30 eingelegt. Zwei Schieber 64 zur Erzeugung einer Hinterschneidung sind seitlich in das Spritzgießwerkzeug 54' eingeführt, so dass die Kavität des Spritzgießwerkzeugs 54' axial durchsetzt wird. Die Figur 9 zeigt eine Ausführungsform des Spritzgießwerkzeugs 54' aus dem erfindungsgemäßen Herstellungsverfahren zum Zeitpunkt des zweiten Verfahrensschritts S12, genauer zum Zeitpunkt des Aushärtens des duroplastische Kunststoffmaterial in der Spritzgießform 54' unter erhöhter Temperatur in S118. Der Optikträger 30 des Pendels 28 der Pendelanordnung ist mittels Kunststoff-Spritzgießtechnik einstückig, insbesondere form- und kraftschlüssig mit dem Kreuzgelenk 32 gefertigt.

Figur 7 zeigt ferner einen weiteren Verfahrensschritt S14 als Blockdiagramm, in dem eine Pendelaufhängung 34 mittels Kunststoff-Spritzgießtechnik gefertigt wird, insbesondere als zweiteiliges, zusammensteckbares Bauteil gefertigt wird. Die Pendelaufhängung 34 wird derart ausgeformt, dass sie einen in Folge des Zusammensteckens gebildeten Hohlraum aufweist, der geeignet ist, zur Aufhängung des Kreuzgelenks 32 die zwei Wälzlager 36b derart zumindest teilweise zu umfassen, dass eine stabile Anordnung des Kreuzgelenks 32 an die Pendelaufhängung 34 gewährleistet ist, wobei gleichzeitig eine freie Beweglichkeit des Kreuzgelenks 32 um die durch die Wälzlager 36b definierte Wellenachse 40b zumindest in einem Winkelbereich uneingeschränkt möglich ist. Insbesondere beträgt dieser Winkelbereich mehr als 15 Grad, bevorzugt mehr als 30 Grad, besonders bevorzugt mehr als 45 Grad. Ferner weisen die beiden zusammensteckbaren Hälften der Pendelaufhängung 34 Mittel zur Realisierung einer Halte- und/oder Rastverbindung in zusammengestecktem Zustand, beispielsweise Haken und Öse, Clips oder dergleichen, auf. Der weitere Verfahrensschritt S14 des erfindungsgemäßen Herstellungsverfahrens umfasst Unterverfahrensschritte S130 bis S136, in denen ein weiteres, insbesondere drittes, Spritzgießwerkzeug 54" zunächst geschlossen wird (Verfahrensschritt S130), in einem weiteren Schritt S132 glasfaserverstärkter thermoplastischer Kunststoff in das Spritzgießwerkzeug 54" eingespritzt wird, das Spritzgießwerkzeug 54" samt eingespritzter Kunststoffmasse ausgeheizt wird, so dass der thermoplastische Kunststoff vernetzt und aushärtet (Schritt S134), sowie abschließend die Pendelaufhängung 34, insbesondere als zweiteiliges zusammensteckbares Bauteil, in Verfahrensschritt S136 aus dem Spritzgießwerkzeug 54" entnommen wird.

Die Montierung der Pendelanordnung in die Pendellaservorrichtung 10 findet in einem weiteren Verfahrensschritt S16 des erfindungsgemäßen Herstellungsverfahrens statt. Zunächst wird in Verfahrensschritt S140 das Pendel, bestehend aus Optikträger 30, Kreuzgelenk 32 sowie gegebenenfalls weiterer Komponenten wie Masse 62 und/oder Metallplatte 48, derart an der Pendelaufhängung 34 angeordnet, dass der in Folge des Zusammensteckens der Pendelaufhängung 34 gebildeten Hohlraum der Pendelaufhängung 34 die zwei Wälzlager 36b des Kreuzgelenks 32 derart zumindest teilweise umfasst, dass eine stabile Anordnung des Kreuzgelenks 32 an der Pendelaufhängung 34 gewährleistet ist, wobei gleichzeitig eine freie Beweglichkeit des Kreuzgelenks 32 um die durch die Wälzlager 36b definierte Wellenachse 40b, somit ein Pendeln des Pendels 28 bezogen auf die Pendelaufhängung 34, zumindest in einem Winkelbereich uneingeschränkt möglich ist. Durch Verwendung der zusammensteckbaren Pendelaufhängung, die die eine der zwei zueinander orthogonalen Wellen 50b in einem Hohlraum zwischen beiden zusammensteckbaren Teilen umfasst und stabil befestigt, werden in erfindungsgemäßem Herstellungsverfahren der Pendelaufhängung eine besonders präzise Haltung und Führung des Kreuzgelenkes 32 unter Einhaltung enger Toleranzen erreicht. Die Verwendung weiterer Hilfsmittel zur präzisen Anpassung und Befestigung, insbesondere auch Nacharbeitung und zum Austarieren des Pendels an der Pendelaufhängung, ist nicht nötig. In Verfahrensschritt S142 wird die Lasereinheit 20 in der Aufnahme 46 des Optikträgers 30 platziert, ausgerichtet und befestigt. Abschließend wird in Verfahrensschritt 144 die Pendelanordnung bestehend aus Pendel 28 und Pendelaufhängung 34 in einer Pendellaservorrichtung 10 montiert. Insbesondere wird dazu die Pendelaufhängung 34 am Gehäuse 12 oder an einem mit dem Gehäuse 12 verbundenen Teil stabil angeordnet. Das Pendel 28 kann sich, derart mittels der Pendelaufhängung 34 pendelbar in der Pendellaservorrichtung 10 montiert, lotrecht im Gravitationsfeld und im Wesentlichen unabhängig von der Ausrichtung des Gehäuses 12 der Pendellaservorrichtung 10, ausrichten.

## Patentansprüche

1. Herstellungsverfahren für eine Pendelanordnung einer Pendellaservorrichtung (10), zumindest aufweisend
• einen Verfahrensschritt, bei dem ein Kreuzgelenk (32) eines Pendels (28) der Pendelanordnung (10) mittels Kunststoff-Spritzgießtechnik unter Formung zweier orthogonaler, mit Wälzlagern (36a,36b) bestückten Wellen (50a,50b) gefertigt wird,
• einen zweiten Verfahrensschritt, bei dem ein Optikträger (30) des Pendels (28) der Pendelanordnung mittels Kunststoff-Spritzgießtechnik einstückig, insbesondere form- und kraftschlüssig, mit dem Kreuzgelenk (32) gefertigt wird
wobei das Kreuzgelenk (32) durch Umspritzen zumindest zweier, je eine Welle (50a,50b) des Kreuzgelenks (32) definierenden Wälzlager (36a,36b), mittels Kunststoff-Spritzgießtechnik einstückig, insbesondere form- und kraftschlüssig, mit den Wälzlagern (36a,36b) gefertigt wird.

2. Herstellungsverfahren nach Anspruch 1, **dadurch gekennzeichnet, dass** die Wälzlager (36a,36b) des Kreuzgelenks (32) zumindest eine, die Haftung der Wälzlager (36a,36b) verbessernde Oberflächenstruktur aufweisen.

3. Herstellungsverfahren nach Anspruch 1-2, **dadurch gekennzeichnet, dass** der Optikträger (30) durch Umspritzen zumindest eines an einer Welle (50a,50b) des Kreuzgelenks (32) befindlichen Wälzlagers (36a,36b) mittels Kunststoff-Spritzgießtechnik einstückig, insbesondere form- und kraftschlüssig, mit dem Kreuzgelenk (32) gefertigt wird.

4. Herstellungsverfahren nach einem der Ansprüche 1-3, **dadurch gekennzeichnet, dass** im Kunststoff-Spritzgießverfahren zumindest eine Aufnahme (46) in dem Optikträger (30) zur Aufnahme einer Lasereinheit (20) ausgeformt wird, insbesondere unter Verwendung eines Mittels zum Erzeugen einer Hinterschneidung (64) ausgeformt wird.

5. Herstellungsverfahren nach einem der Ansprüche 1-4, **dadurch gekennzeichnet, dass** das Kreuzgelenk (32) und/oder der Optikträger (30) aus duroplastischem Kunststoff mittels Kunststoff-Spritzgießtechnik gefertigt werden/wird.

6. Herstellungsverfahren nach einem der Ansprüche 1-5, **dadurch gekennzeichnet, dass** mindestens eine Masse (62), insbesondere eine Masse (62) zum Austarieren des Pendels (28), beim Spritzgießen an den Optikträger (30) angebunden oder in den Optikträger (30) eingebettet wird.

7. Herstellungsverfahren nach einem der Ansprüche 1-6, **dadurch gekennzeichnet, dass** der Optikträger (30) zumindest teilweise in einem Mehrkomponenten-Spritzgießverfahren unter Verwendung von Metall gefertigt wird, insbesondere hinsichtlich einer Masseverteilung austariert wird.

8. Herstellungsverfahren nach einem der Ansprüche 1-7, **dadurch gekennzeichnet, dass** in einem weiteren Verfahrensschritt eine Pendelaufhängung (34) mittels Kunststoff-Spritzgießtechnik gefertigt wird, insbesondere als zweiteiliges, zusammensteckbares Bauteil gefertigt wird.

9. Herstellungsverfahren nach Anspruch 8, **dadurch gekennzeichnet, dass** die Pendelaufhängung (34) aus thermoplastischem Kunststoff, insbesondere glasfaserverstärktem thermoplastischem Kunststoff, mittels Kunststoff-Spritzgießtechnik gefertigt wird.

10. Herstellungsverfahren nach einem der Ansprüche 8-9, **dadurch gekennzeichnet, dass** in einem weiteren Verfahrensschritt das Pendel (28) pendelbar an der Pendelaufhängung (34) angeordnet wird.

11. Herstellungsverfahren nach Anspruch 8-10, **dadurch gekennzeichnet, dass** in einem weiteren Verfahrensschritt die Pendelanordnung bestehend aus Pendel (28) und Pendelaufhängung (34) in einer Pendellaservorrichtung (10) montiert wird.

12. Selbstnivellierende Pendellaservorrichtung (10), aufweisend zumindest ein Gehäuse (12), ein in dem Gehäuse (12) mittels Pendelaufhängung (34) pendelbar angeordnetes Pendel (28) sowie zumindest eine an einem Optikträger (30) des Pendels (28) angebrachte Lasereinheit (20) zur Erzeugung zumindest einer optischen Markierung, hergestellt nach einem Verfahren gemäß zumindest einem der Ansprüche 1-11, wobei ein Kreuzgelenk (32) des Pendels (28) und der Optikträger (30) des Pendels (28) mittels Kunststoff-Spritzgießtechnik einstückig, insbesondere form- und kraftschlüssig, realisiert sind und wobei eine Komponente des Wälzlagers (36a,36b), insbesondere eines inneren oder eines äußeren der zueinander beweglich gelagerten Ringe des Wälzlagers (36a,36b), durch um-, an- bzw. einspritzen und anschließendes Aushärten des Kunststoffs angebunden wird, wobei die Funktionalität des Wälzlagers (36a,36b) uneingeschränkt erhalten bleibt.

13. Selbstnivellierende Pendellaservorrichtung nach Anspruch 12, **dadurch gekennzeichnet, dass** Wälzlager (36a,36b) des Kreuzgelenks (32) zumindest eine, die Haftung der Wälzlager verbessernde Oberflächenstruktur (66) aufweisen.

## Claims

1. Production method for a pendulum arrangement of a pendulum laser apparatus (10), at least including
• a method step, in which a universal joint (32) of a pendulum (28) of the pendulum arrangement (10) is produced by means of plastic injection moulding, by forming two orthogonal shafts (50a, 50b) that are provided with rolling bearings (36a, 36b),
• a second method step, in which an optics carrier (30) of the pendulum (28) of the pendulum arrangement is produced integrally, in particular in a form-fitting and force-fitting manner, with the universal joint (32), by means of plastic injection moulding,
wherein the universal joint (32) is produced integrally with the rolling bearings (36a, 36b), in particular in a form-fitting and force-fitting manner, by overmoulding at least two rolling bearings (36a, 36b) defining in each case one shaft (50a, 50b) of the universal joint (32).

2. Production method according to Claim 1, **characterized in that** the rolling bearings (36a, 36b) of the universal joint (32) have at least one surface structure improving the adhesion of the rolling bearings (36a, 36b).

3. Production method according to Claim 1-2, **characterized in that** the optics carrier (30) is produced integrally with the universal joint (32), in particular in a form-fitting and force-fitting manner, by means of plastic injection moulding, by overmoulding at least one rolling bearing (36a, 36b) located at a shaft (50b, 50b) of the universal joint (32).

4. Production method according to one of Claims 1-3, **characterized in that**, in the plastic injection moulding method, at least one receiving means (46) is formed in the optics carrier (30) for receiving a laser unit (20), in particular is formed using a means for producing an undercut (64).

5. Production method according to one of Claims 1-4, **characterized in that** the universal joint (32) and/or the optics carrier (30) is/are formed from a thermoset plastic using plastic injection moulding technology.

6. Production method according to one of Claims 1-5, **characterized in that** at least one mass (62), in particular a mass (62) for balancing the pendulum (28), is connected to the optics carrier (30) or embedded in the object carrier (30) during injection moulding.

7. Production method according to one of Claims 1-6, **characterized in that** the optics carrier (30) is produced at least partially in a multicomponent injection moulding method using metal, in particular is balanced with respect to a mass distribution.

8. Production method according to one of Claims 1-7, **characterized in that**, in a further method step, a pendulum suspension (34) is produced by means of plastic injection moulding, in particular is produced as a two-part intermatable structural element.

9. Production method according to Claim 8, **characterized in that** the pendulum suspension (34) is produced using plastic injection moulding technology from a thermoplastic, in particular a glass-fibre reinforced thermoplastic.

10. Production method according to one of Claims 8-9, characterized that, in a further method step, the pendulum (28) is arranged such that it can oscillate on the pendulum suspension (34).

11. Production method according to Claim 8-10, **characterized in that**, in a further method step, the pendulum arrangement, composed of the pendulum (28) and the pendulum suspension (34), is mounted in a pendulum laser apparatus (10).

12. Self-levelling pendulum laser apparatus (10), having at least one housing (12), a pendulum (28) arranged such that it is able to oscillate in the housing (12) by means of the pendulum suspension (34), and at least one laser unit (20), attached to an optics carrier (30) of the pendulum (28), for generating at least one optical marking, produced according to a method according to at least one of Claims 1-11, wherein a universal joint (32) of the pendulum (28) and the optics carrier (30) of the pendulum (28) are realised integrally, in particular in a form-fitting and force-fitting manner, by means of plastic injection moulding, and wherein a component of the rolling bearing (36a, 36b), in particular of an inner one or an outer one of the rings of the rolling bearing (36a, 36b), which rings are mounted so that they are movable relative to one another, is connected by way of overmoulding, addition moulding or injection moulding and subsequent curing of the plastic, wherein the functionality of the rolling bearing (36a, 36b) is maintained without limitation.

13. Self-levelling pendulum laser apparatus according to Claim 12, **characterized in that** rolling bearings (36a, 36b) of the universal joint (32) have at least one surface structure (66) improving the adhesion of the rolling bearings.

## Revendications

1. Procédé de fabrication d'un arrangement pendulaire d'un dispositif à laser pendulaire (10), comprenant au moins
* une étape de procédé lors de laquelle un joint universel (32) d'un pendule (28) de l'arrangement pendulaire (10) est fabriqué au moyen d'une technique de moulage par injection de matière plastique en formant deux arbres (50a, 50b) orthogonaux équipés de paliers à roulement (36a, 36b),
* une deuxième étape de procédé, lors de laquelle un porte-optique (30) du pendule (28) de l'arrangement pendulaire est fabriqué d'un seul tenant au moyen d'une technique de moulage par injection de matière plastique, notamment par assemblage par complémentarité de formes et de force, avec le joint universel (32),
le joint universel (32) étant fabriqué par surmoulage d'au moins deux paliers à roulement (36a, 36b), définissant respectivement un arbre (50a, 50b) du joint universel (32), d'un seul tenant au moyen d'une technique de moulage par injection de matière plastique, notamment par assemblage par complémentarité de formes et de force, avec les paliers à roulement (36a, 36b).

2. Procédé de fabrication selon la revendication 1, **caractérisé en ce que** les paliers à roulement (36a, 36b) du joint universel (32) possèdent au moins une structure de surface qui améliore l'adhérence des paliers à roulement (36a, 36b).

3. Procédé de fabrication selon les revendications 1 et 2, **caractérisé en ce que** le porte-optique (30) est fabriqué par surmoulage d'au moins un palier à roulement (36a, 36b) se trouvant sur un arbre (50a, 50b) du joint universel (32), d'un seul tenant au moyen d'une technique de moulage par injection de matière plastique, notamment par assemblage par complémentarité de formes et de force, avec le joint universel (32).

4. Procédé de fabrication selon l'une des revendications 1 à 3, **caractérisé en ce qu'**au moins un logement (46) est formé dans le procédé de moulage par injection de matière plastique dans le porte-optique (30) en vue d'accueillir une unité de laser (20), notamment est formé en utilisant un moyen destiné à produire une contre-dépouille (64).

5. Procédé de fabrication selon l'une des revendications 1 à 4, **caractérisé en ce que** le joint universel (32) et/ou le porte-optique (30) est/sont fabriqués à partir de matière plastique thermodurcissable au moyen de la technique de moulage par injection de matière plastique.

6. Procédé de fabrication selon l'une des revendications 1 à 5, **caractérisé en ce qu'**au moins une masse (62), notamment une masse (62) destinée à tarer le pendule (28), est attachée au porte-optique (30) ou enrobée dans le porte-optique (30) lors du moulage par injection.

7. Procédé de fabrication selon l'une des revendications 1 à 6, **caractérisé en ce que** le porte-optique (30) est fabriqué au moins partiellement dans un procédé de moulage par injection de composantes multiples en utilisant du métal, notamment est taré du point de vue d'une distribution des masses.

8. Procédé de fabrication selon l'une des revendications 1 à 7, **caractérisé en ce que** dans une étape de procédé supplémentaire, une suspension de pendule (34) est fabriquée au moyen de la technique de moulage par injection de matière plastique, notamment sous la forme d'un élément structural emboîtable en deux parties.

9. Procédé de fabrication selon la revendication 8, **caractérisé en ce que** la suspension de pendule (34) est fabriquée en matière thermoplastique, notamment en matière thermoplastique renforcée de fibres de verre, au moyen de la technique de moulage par injection de matière plastique.

10. Procédé de fabrication selon l'une des revendications 8 et 9, **caractérisé en ce que** dans une étape de procédé supplémentaire, le pendule (28) est disposé sur la suspension de pendule (34) de manière à pouvoir accomplir un mouvement pendulaire.

11. Procédé de fabrication selon l'une des revendications 8 à 10, **caractérisé en ce que** dans une étape de procédé supplémentaire, l'arrangement pendulaire composé du pendule (28) et de la suspension de pendule (34) est monté dans un dispositif à laser, pendulaire (10).

12. Dispositif à laser pendulaire (10) autonivelant, comprenant au moins un boîtier (12), un pendule (28) disposé dans le boîtier (12) au moyen d'une suspension de pendule (34) de manière à pouvoir accomplir un mouvement pendulaire ainsi qu'au moins une unité à laser (20) montée sur un porte-optique (30) du pendule (28) et destinée à générer au moins un marquage optique, fabriqué conformément à un procédé selon au moins l'une des revendications 1 à 11, un joint universel (32) du pendule (28) et le porte-optique (30) du pendule (28) étant réalisés d'un seul tenant, notamment par assemblage par complémentarité de formes et de force, au moyen d'une technique de moulage par injection de matière plastique, et un composant du palier à roulement (36a, 36b), notamment une bague intérieure ou une bague extérieure des bagues montées mobiles l'une par rapport à l'autre du palier à roulement (36a, 36b), étant attaché par surmoulage, pulvérisation ou injection et ensuite durcissement de la matière plastique, la fonctionnalité du palier à roulement (36a, 36b) étant maintenue sans restrictions.

13. Dispositif à laser pendulaire autonivelant selon la revendication 12, **caractérisé en ce que** les paliers à roulement (36a, 36b) du joint universel (32) possèdent au moins une structure de surface (66) qui améliore l'adhérence des paliers à roulement.
